# EUROPEAN PATENT APPLICATION

(11) **EP 4 607 871 A1**
(43) Date of publication of application: **27.08.2025**
(21) Application number: 22967459.3
(22) Date of filing: 05.12.2022
(51) Int. Cl.: H04L 27/00

(54) **NETWORK SERVICE METHOD, COMMUNICATION APPARATUS, AND COMMUNICATION SYSTEM**

(71) Applicant: Huawei Technologies Co., Ltd., Shenzhen, Guangdong 518129 (CN)
(72) Inventor: XING, Weijun, Shenzhen, Guangdong 518129 (CN); WU, Shaoyun, Shenzhen, Guangdong 518129 (CN)
(74) Representative: MERH-IP Matias Erny Reichl Hoffmann Patentanwälte PartG mbB
(86) International application number: PCT/CN2022/136483
(87) International publication number: WO 2024/119292

(57) **Abstract**

This application discloses a network service method, a communication apparatus, and a communication system. The network service method includes: A second network element sends a first request message; correspondingly, a first network element receives the first request message, where the first request message is used to request a first network service, the first network element is used to schedule a network service in a first network, and the second network element is configured to provide a service for a user in a second network; the first network element sends a first feedback message; and correspondingly, the second network element receives the first feedback message, where the first feedback message includes information about a third network element or a service result of the first network service, and the third network element provides the first network service. By using embodiments of this application, a better network service can be provided for the user in the second network.

## Description

### TECHNICAL FIELD

This application relates to the field of communication technologies, and in particular, to a network service method, a communication apparatus, and a communication system.

### BACKGROUND

In a 5G communication system, a differentiated network service may be provided for a user by using a non-public network (non-public network, NPN) and a network slice. For example, different network slices may provide different connection services for the user. The NPN may include: a stand-alone non-public network (stand-alone non-public network, S-NPN) and a public network integrated NPN (public network integrated non-public network, PNI-NPN). The NPN may also be referred to as a dedicated network or a private network, and is configured to provide a service for a user in the network.

Generally, the NPN is isolated from a public land mobile network (public land mobile network, PLMN), to be specific, a service of the non-public network is independent of a data service of the PLMN network. A service accepted by the user in the NPN is provided by the NPN. In this manner, the service accepted by the user in the NPN relies on a capability of the NPN. When the capability of the NPN is limited, the service of the user is affected. Therefore, how to provide a better network service for the user is a problem that needs to be urgently resolved.

### SUMMARY

Embodiments of this application provide a network service method, a communication apparatus, and a communication system to provide a better network service for a user.

According to a first aspect, an embodiment of this application provides a network service method. The method includes:
A first network element receives a first request message from a second network element, where the first request message is used to request a first network service, the first network element is configured to schedule a network service in a first network, and the second network element is configured to provide a service for a user in a second network; and the first network element sends a first feedback message to the second network element, where the first feedback message includes information about a third network element or a service result of the first network service, and the third network element provides the first network service.

In this embodiment of this application, the second network element may discover and schedule, by using the first network element, a network service provided by a network element (for example, the third network element) in another network, so that cross-network scheduling of the network service is implemented, the network service accepted by the user in the second network is not limited to a capability of the second network, and the network service can be better provided for the user in the second network.

In a possible implementation, the third network element is not included in the first network, and before the first network element sends the first feedback message to the second network element, the method further includes:
The first network element sends a second request message to a fourth network element, where the second request message is used to request the first network service from the fourth network element, the fourth network element is configured to schedule a network service in a third network, and the third network includes the third network element; and the first network element receives a second feedback message from the fourth network element, where the second feedback message includes the information about the third network element or the service result of the first network service.

In this embodiment of this application, when a network element providing the first network service does not exist in the first network, the first network element may send the second request message to the fourth network element to request the first network service from the third network, so that network services in the first network and the third network may be mutually invoked by using the first network element and the fourth network element, thereby improving network service efficiency.

In a possible implementation, before the first network element sends the second request message to the fourth network element, the method further includes:
The first network element receives first indication information from the fourth network element, where the first indication information indicates that the third network element provides the first network service.

In this embodiment of this application, the third network element may register the first network service with the fourth network element, so that the fourth network element can schedule the first network service. The fourth network element may share, with the first network element by using the first indication information, a network service scheduled by the fourth network element, so that the first network element can quickly send a corresponding request message to the fourth network element when requiring the first network service, thereby improving the network service efficiency.

In a possible implementation, the first network element is an access network element, the fourth network element is a core network element, and the third network element includes at least one of the following network functions: an access management function, a session management function, a data analysis function, and a charging function; or the first network element is the core network element, the fourth network element is the access network element, and the third network element includes at least one of the following network functions: a connection resource management function, a perception function, and a mobility management function.

In this embodiment of this application, the first network element is an access network element, that is, the first network is an access network, or the first network is included in the access network; and the fourth network element is a core network element, that is, the third network is a core network, or the third network is included in the core network. Alternatively, the first network element is a core network element, that is, the first network is a core network, or the first network is included in a core network; and the fourth network element is an access network element, that is, the third network is an access network, or the third network is included in an access network. In this application, the first network element and the fourth network element respectively schedule a network service of the access network and a network service of the core network. The first network element interacts with the fourth network element to mutually invoke the network services in the access network and the core network.

In a possible implementation, the third network element is included in the first network, and before the first network element receives the first request message from the second network element, the method further includes:
The first network element receives first registration information from the third network element, where the first registration information is used to register the first network service of the third network element with the first network element.

In this embodiment of this application, the third network element is included in the first network, and the third network element may register, with the first network element, a network service that can be provided by the third network element or a network function that can be shared by the third network element, so that the first network element can schedule the network service and the network function of the third network element.

In a possible implementation, the method further includes:
The first network element receives second registration information sent by the second network element, where the second registration information is used to register or cancel a second network service of the second network with the first network element.

In this embodiment of this application, the second network may register or cancel the second network service of the second network with the first network element by using the second network element, so that the first network element can schedule the second network service of the second network. In this way, another network or network element can invoke the second network service by using the first network element, so that a resource of the second network can be fully used, thereby improving the network service efficiency.

In a possible implementation, after the first network element receives the second registration information sent by the second network element, the method further includes:
The first network element sends second indication information to the fourth network element, where the second indication information indicates that the second network provides the second network service, and the fourth network element is configured to schedule the network service in the third network.

In this embodiment of this application, after receiving the second registration information, the first network element may indicate, to the fourth network element by using the first indication information, that the second network provides the second network service, so that when the fourth network element needs the second network service, the fourth network element can quickly discover, based on the second indication information, the second network providing the second network service.

In a possible implementation, the second indication information includes the second registration information.

In this embodiment of this application, the first network element may share the registration information of the second network with the fourth network element, so that the fourth network element can schedule the second network service of the second network based on the second registration information.

In a possible implementation, the second registration information includes at least one of the following: identification information, a business type, a service type, a data type, and location information of the second network.

In a possible implementation, the first network service includes at least one of the following: an access management service, a session management service, a data analysis service, a charging service, a connection resource management service, a perception service, and a mobility management service.

In a possible implementation, the second network element is included in the second network, and the second network includes a non-public network.

In this embodiment of this application, the second network is a non-public network, to be specific, the second network element can provide a dedicated service for a user in the second network. The second network may request, from the first network element by using the second network element, a network service provided by a network element (for example, the third network element) in another network, so that a network service accepted by a user in the non-public network is not limited to a capability of the non-public network, and the network service can be better provided for the user in the non-public network.

In a possible implementation, the first network is included in an access network or a core network, and the second network is included in the access network or the core network.

According to a second aspect, an embodiment of this application provides a network service method. The method includes:
A second network element sends a first request message to a first network element, where the first request message is used to request a first network service, the first network element is configured to schedule a network service in a first network, and the second network element is configured to provide a service for a user in a second network; and the second network element receives a first feedback message from the first network element, where the first feedback message includes information about a third network element or a service result of the first network service, and the third network element provides the first network service.

In this embodiment of this application, the second network element may send the first request message to the first network element based on a request of the user in the second network, so that the first network element discovers, for the second network element, the third network element providing the first network service. That is, the second network element may discover and schedule, by using the first network element, a network service provided by a network element (for example, the third network element) in another network, so that cross-network scheduling of the network service is implemented, the network service accepted by the user in the second network is not limited to a capability of the second network, and the network service can be better provided for the user in the second network.

In a possible implementation, the first feedback message includes the information about the third network element, and the method further includes:
The second network element sends a third request message to the third network element based on the first feedback message, where the third request message is used to request the first network service; and the second network receives a third feedback message from the third network element, where the third feedback message includes the service result of the first network service.

In this embodiment of this application, the first network element may send the information about the third network element to the second network element, and then the second network element sends a request message of the first network service to the third network element, so that the third network element can provide the first network service for the second network element, the cross-network scheduling of the network service is implemented, the network service accepted by the user in the second network is not limited to the capability of the second network, and the network service can be better provided for the user in the second network.

In a possible implementation, the method further includes:
The second network element sends second registration information to the first network element, where the second registration information is used to register or cancel a second network service of the second network with the first network element.

In this embodiment of this application, the second network may register or cancel the second network service of the second network with the first network element by using the second network element, so that the first network element can schedule the second network service of the second network. In this way, another network or network element can invoke the second network service by using the first network element, so that a resource of the second network can be fully used, thereby improving network service efficiency.

In a possible implementation, the second registration information includes at least one of the following: identification information, a business type, a service type, a data type, and location information of the second network.

In a possible implementation, the first network service includes at least one of the following: an access management service, a session management service, a data analysis service, a charging service, a connection resource management service, a perception service, and a mobility management service.

In a possible implementation, the second network element is included in the second network, and the second network includes a non-public network.

In this embodiment of this application, the second network is a non-public network, to be specific, the second network element can provide a dedicated service for a user in the second network. The second network may request, from the first network element by using the second network element, a network service provided by a network element (for example, the third network element) in another network, so that a network service accepted by a user in the non-public network is not limited to a capability of the non-public network, and the network service can be better provided for the user in the non-public network.

In a possible implementation, the first network is included in an access network or a core network, and the second network is included in the access network or the core network.

According to a third aspect, an embodiment of this application provides a network service method. The method includes:
A fourth network element receives a second request message from a first network element, where the second request message is used to request a first network service, the first network element is configured to schedule a network service in a first network, and the fourth network element is configured to schedule a network service in a third network; and the fourth network element sends a second feedback message to the first network element, where the second feedback message includes information about a third network element or a service result of the first network service, and the third network element provides the first network service.

In this embodiment of this application, when a network element providing the first network service does not exist in the first network, the first network element may send the second request message to the fourth network element to request the first network service from the third network, so that network services in the first network and the third network may be mutually invoked by using the first network element and the fourth network element, thereby improving network service efficiency.

In a possible implementation, the method further includes:
The fourth network element sends first indication information to the first network element, where the first indication information indicates that the third network element provides the first network element service.

In this embodiment of this application, the third network element may register the first network service with the fourth network element, so that the fourth network element can schedule the first network service. The fourth network element may share, with the first network element by using the first indication information, a network service scheduled by the fourth network element, so that the first network element can quickly send a corresponding request message to the fourth network element when requiring the first network service, thereby improving the network service efficiency.

In a possible implementation, the first network element is an access network element, the fourth network element is a core network element, and the third network element includes at least one of the following network functions: an access management function, a session management function, a data analysis function, and a charging function; or the first network element is the core network element, the fourth network element is the access network element, and the third network element includes at least one of the following network functions: a connection resource management function, a perception function, and a mobility management function.

In this embodiment of this application, the first network element and the fourth network element respectively schedule a network service of the access network and a network service of the core network. The first network element interacts with the fourth network element to mutually invoke the network services in the access network and the core network.

In a possible implementation, the method further includes:
The fourth network element receives second indication information from the first network element, where the second indication information indicates that a second network provides a second network service.

In this embodiment of this application, after receiving the second registration information of the second network, the first network element may indicate, to the fourth network element by using the first indication information, that the second network provides the second network service, so that when the fourth network element needs the second network service, the fourth network element can quickly discover, based on the second indication information, the second network providing the second network service.

In a possible implementation, the second indication information includes second registration information, and the second registration information is used to register or cancel the second network service of the second network.

In this embodiment of this application, the first network element may share the registration information of the second network with the fourth network element, so that the fourth network element can schedule the second network service of the second network based on the second registration information.

In a possible implementation, the second registration information includes at least one of the following: identification information, a business type, a service type, a data type, and location information of the second network.

In a possible implementation, the first network is included in an access network or a core network, and the second network is included in the access network or the core network.

In a possible implementation, the first network service includes at least one of the following: an access management service, a session management service, a data analysis service, a charging service, a connection resource management service, a perception service, and a mobility management service.

According to a fourth aspect, an embodiment of this application provides a network service method. The method includes:
A third network element determines to provide a first network service; and the third network element sends first registration information to a first network element, where the first registration information is used to register the first network service of the third network element with the first network element, the first network element is used to schedule a network service in a first network, and the third network element is included in the first network.

In this embodiment of this application, the third network element is included in the first network, and the third network element may register, with the first network element, a network service that can be provided by the third network element or a network function that can be shared by the third network element, so that the first network element can schedule the network service and the network function of the third network element.

In a possible implementation, the method further includes:
The third network element receives a third request message sent by a second network element, where the third request message is used to request the first network service, and the second network element provides a service for a user in a second network; and the third network element sends a third feedback message to the second network element, where the third feedback message includes a service result of the first network service.

In this embodiment of this application, the second network element may discover, by using the first network element, the third network element providing the first network service, and send the third request message to the third network element to request the third network element to provide the first network service for the second network element. The third network element may provide the first network service for the second network element based on the third request message, and send the service result of the first network service to the second network element, so that a cross-network service of the third network element is implemented, the network service accepted by the user in the second network is not limited to a capability of the second network, and the network service can be better provided for the user in the second network.

According to a fifth aspect, an embodiment of this application provides a network service method. The method includes:
A second network element sends a first request message to a first network element, where the first request message is used to request a first network service, the second network element is configured to provide a service for a user in a second network, and the first network element is configured to schedule a network service in a first network; and the first network element receives the first request message, and sends a first feedback message to the second network element, where the first feedback message includes information about a third network element or a service result of the first network service, and the third network element provides the first network element service.

In this embodiment of this application, the second network element may discover and schedule, by using the first network element, a network service provided by a network element (for example, the third network element) in another network, so that cross-network scheduling of the network service is implemented, the network service accepted by the user in the second network is not limited to a capability of the second network, and the network service can be better provided for the user in the second network.

In a possible implementation, the first feedback message includes the information about the third network element, and the method further includes:
The second network element receives the first feedback message, and sends a third request message to the third network element based on the first feedback message, where the third request message is used to request the first network service; and the third network element receives the third request message, and sends a third feedback message to the second network element, where the third feedback message includes a service result of the first network service.

In this embodiment of this application, the first network element may send the information about the third network element to the second network element, and then the second network element sends a request message of the first network service to the third network element, so that the third network element can provide the first network service for the second network element, the cross-network scheduling of the network service is implemented, the network service accepted by the user in the second network is not limited to the capability of the second network, and the network service can be better provided for the user in the second network.

In a possible implementation, the third network element is not included in the first network, and the method further includes:
The first network element sends a second request message to a fourth network element, where the second request message is used to request the first network service from the fourth network element, the fourth network element is configured to schedule a network service in a third network, and the third network includes the third network element; and the first network element receives a second feedback message from the fourth network element, where the second feedback information includes the information about the third network element or the service result of the first network service.

In this embodiment of this application, when a network element providing the first network service does not exist in the first network, the first network element may send the second request message to the fourth network element to request the first network service from the third network, so that network services in the first network and the third network may be mutually invoked by using the first network element and the fourth network element, thereby improving network service efficiency.

In a possible implementation, before the first network element forwards the first request message to the fourth network element, the method further includes:
The first network element receives first indication information from the fourth network element, where the first indication information indicates that the third network element provides the first network service.

In this embodiment of this application, the third network element may register the first network service with the fourth network element, so that the fourth network element can schedule the first network service. The fourth network element may share, with the first network element by using the first indication information, a network service scheduled by the fourth network element, so that the first network element can quickly send a corresponding request message to the fourth network element when requiring the first network service, thereby improving the network service efficiency.

In a possible implementation, the first network element is an access network element, the fourth network element is a core network element, and the third network element includes at least one of the following network functions: an access management function, a session management function, a data analysis function, and a charging function; or the first network element is the core network element, the fourth network element is the access network element, and the third network element includes at least one of the following network functions: a connection resource management function, a perception function, and a mobility management function.

In this embodiment of this application, the first network element and the fourth network element respectively schedule a network service of the access network and a network service of the core network. The first network element interacts with the fourth network element to mutually invoke the network services in the access network and the core network.

In a possible implementation, the third network element is included in the first network, and before the first network element receives the first request message from the second network element, the method further includes:
The first network element receives first registration information from the third network element, where the first registration information is used to register the first network service of the third network element with the first network element.

In this embodiment of this application, the third network element is included in the first network, and the third network element may register, with the first network element, a network service that can be provided by the third network element or a network function that can be shared by the third network element, so that the first network element can schedule the network service and the network function of the third network element.

In a possible implementation, the method further includes:
The second network element sends second registration information to the first network element, where the second registration information is used to register or cancel a second network service of the second network with the first network element.

In this embodiment of this application, the second network may register or cancel the second network service of the second network with the first network element by using the second network element, so that the first network element can schedule the second network service of the second network. In this way, another network or network element can invoke the second network service by using the first network element, so that a resource of the second network can be fully used, thereby improving network service efficiency.

In a possible implementation, after the second network element sends the second registration information to the first network element, the method further includes:
The first network element sends second indication information to the fourth network element, where the second indication information indicates that the second network provides the second network service, and the fourth network element is configured to schedule the network service in the third network.

In this embodiment of this application, after receiving the second registration information, the first network element may indicate, to the fourth network element by using the first indication information, that the second network provides the second network service, so that when the fourth network element needs the second network service, the fourth network element can quickly discover, based on the second indication information, the second network providing the second network service.

In a possible implementation, the second indication information includes the second registration information.

In this embodiment of this application, the first network element may share the registration information of the second network with the fourth network element, so that the fourth network element can schedule the second network service of the second network based on the second registration information.

In a possible implementation, the second registration information includes at least one of the following: identification information, a business type, a service type, a data type, and location information of the second network.

In a possible implementation, the first network service includes at least one of the following: an access management service, a session management service, a data analysis service, a charging service, a connection resource management service, a perception service, and a mobility management service.

In a possible implementation, the second network element is included in the second network, and the second network includes a non-public network.

In this embodiment of this application, the second network is a non-public network, to be specific, the second network element can provide a dedicated service for a user in the second network. The second network may request, from the first network element by using the second network element, a network service provided by a network element (for example, the third network element) in another network, so that a network service accepted by a user in the non-public network is not limited to a capability of the non-public network, and the network service can be better provided for the user in the non-public network.

In a possible implementation, the first network is included in an access network or a core network, and the second network is included in the access network or the core network.

According to a sixth aspect, an embodiment of this application provides a communication apparatus. The apparatus is configured to perform the method according to any one of the first aspect or the possible implementations of the first aspect. The communication apparatus includes a unit for performing the method according to any one of the first aspect or the possible implementations of the first aspect.

According to a seventh aspect, an embodiment of this application provides a communication apparatus. The apparatus is configured to perform the method according to any one of the second aspect or the possible implementations of the second aspect. The communication apparatus includes a unit for performing the method according to any one of the second aspect or the possible implementations of the second aspect.

According to an eighth aspect, an embodiment of this application provides a communication apparatus. The apparatus is configured to perform the method according to any one of the third aspect or the possible implementations of the third aspect. The communication apparatus includes a unit for performing the method in any one of the third aspect or the possible implementations of the third aspect.

According to a ninth aspect, an embodiment of this application provides a communication apparatus. The apparatus is configured to perform the method according to any one of the fourth aspect or the possible implementations of the fourth aspect. The communication apparatus includes a unit for performing the method according to any one of the fourth aspect or the possible implementations of the fourth aspect.

According to a tenth aspect, an embodiment of this application provides a communication apparatus. The apparatus is configured to perform the method according to any one of the fifth aspect or the possible implementations of the fifth aspect. The communication apparatus includes a unit for performing the method according to any one of the fifth aspect or the possible implementations of the fifth aspect.

In the sixth aspect, the seventh aspect, the eighth aspect, the ninth aspect, or the tenth aspect, the communication apparatus may include a transceiver unit and a processing unit. For specific descriptions of the transceiver unit and the processing unit, refer to apparatus embodiments shown below.

According to an eleventh aspect, this application provides a communication apparatus. The communication apparatus includes a processor. The processor may be configured to execute computer-executable instructions stored in a memory, so that the method according to any one of the first aspect or the possible implementations of the first aspect is performed, or the method according to any one of the second aspect or the possible implementations of the second aspect is performed, or the method according to any one of the third aspect or the possible implementations of the third aspect is performed, or the method according to any one of the fourth aspect or the possible implementations of the fourth aspect is performed, or the method according to any one of the fifth aspect or the possible implementations of the fifth aspect is performed.

In this embodiment of this application, in a process of performing the foregoing method, a process of sending information in the foregoing method may be understood as a process of outputting information based on instructions of the processor. When the information is output, the processor outputs the information to a transceiver, so that the transceiver transmits the information. After the information is output by the processor, other processing may be performed before the information reaches the transceiver. Similarly, when the processor receives input information, the transceiver receives the information, and inputs the information to the processor. Further, after the transceiver receives the information, other processing may need to be performed on the information before the information is input to the processor.

An operation such as sending and/or receiving related to the processor may be generally understood as an instruction output based on the processor if there is no special description or if the operation does not conflict with an actual function or internal logic of the operation in related descriptions.

In an implementation process, the processor may be a processor specially configured to perform these methods, or may be a processor, for example, a general-purpose processor that executes computer instructions in a memory to perform these methods. For example, the processor may further be configured to execute a program stored in the memory. When the program is executed, the communication apparatus is enabled to perform the method according to any one of the first aspect or the possible implementations of the first aspect, or the communication apparatus is enabled to perform the method according to any one of the second aspect or the possible implementations of the second aspect, or the communication apparatus is enabled to perform the method according to any one of the third aspect or the possible implementations of the third aspect, or the communication apparatus is enabled to perform the method according to any one of the fourth aspect or the possible implementations of the fourth aspect.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive a packet, send a packet, or the like.

According to a twelfth aspect, an embodiment of this application provides a communication apparatus. The communication apparatus includes a logic circuit and an interface. The logic circuit is coupled to the interface. The interface is configured to input a first request message and output a first feedback message.

It may be understood that for descriptions of the first request message and the first feedback message, refer to the method according to any one of the first aspect or the possible implementations of the first aspect. Details are not described herein again.

According to a thirteenth aspect, an embodiment of this application provides a communication apparatus. The communication apparatus includes a logic circuit and an interface. The logic circuit is coupled to the interface. The interface is configured to output a first request message and input a first feedback message.

It may be understood that for descriptions of the first request message and the first feedback message, refer to the method according to any one of the second aspect or the possible implementations of the second aspect. Details are not described herein again.

According to a fourteenth aspect, an embodiment of this application provides a communication apparatus. The communication apparatus includes a logic circuit and an interface. The logic circuit is coupled to the interface. The interface is configured to input a second request message and output a second feedback message.

It may be understood that for descriptions of the second request message and the second feedback message, refer to the method according to any one of the third aspect or the possible implementations of the third aspect. Details are not described herein again.

According to a fifteenth aspect, an embodiment of this application provides a communication apparatus. The communication apparatus includes a logic circuit and an interface. The logic circuit is coupled to the interface. The logic circuit is configured to provide a first network service. The interface is configured to output first registration information.

It may be understood that for descriptions of the first network service and the first registration information, refer to the method according to any one of the fourth aspect or the possible implementations of the fourth aspect. Details are not described herein again.

According to a sixteenth aspect, an embodiment of this application provides a computer-readable storage medium. The computer-readable storage medium is configured to store a computer program. When the computer program runs on a computer, the method according to any one of the first aspect or the possible implementations of the first aspect is performed, or the method according to any one of the second aspect or the possible implementations of the second aspect is performed, or the method according to any one of the third aspect or the possible implementations of the third aspect is performed, or the method according to any one of the fourth aspect or the possible implementations of the fourth aspect is performed, or the method according to any one of the fifth aspect or the possible implementations of the fifth aspect is performed.

According to a seventeenth aspect, an embodiment of this application provides a computer program product. The computer program product includes a computer program or computer code. When the computer program product runs on a computer, the method according to any one of the first aspect or the possible implementations of the first aspect is performed, or the method according to any one of the second aspect or the possible implementations of the second aspect is performed, or the method according to any one of the third aspect or the possible implementations of the third aspect is performed, or the method according to any one of the fourth aspect or the possible implementations of the fourth aspect is performed, or the method according to any one of the fifth aspect or the possible implementations of the fifth aspect is performed.

According to an eighteenth aspect, an embodiment of this application provides a communication system. The communication system includes at least two of the following: a first network element, a second network element, a third network element, and a fourth network element. The first network element is configured to perform the method according to any one of the first aspect or the possible implementations of the first aspect. The second network element is configured to perform the method according to any one of the second aspect or the possible implementations of the second aspect. The fourth network element is configured to perform the method according to any one of the third aspect or the possible implementations of the third aspect. The third network element is configured to perform the method according to any one of the fourth aspect or the possible implementations of the fourth aspect.

### BRIEF DESCRIPTION OF DRAWINGS

To describe technical solutions in embodiments of this application more clearly, the following briefly describes the accompanying drawings used in embodiments of this application. It is clear that the accompanying drawings described below show merely some embodiments of this application, and a person of ordinary skill in the art may still derive other drawings from these accompanying drawings without creative efforts.
FIG. 1 is a diagram of a 5G core network according to an embodiment of this application;
FIG. 2 is a diagram of a 5G network architecture according to an embodiment of this application;
FIG. 3 is a diagram of network element interaction according to an embodiment of this application;
FIG. 4 is a diagram of a network architecture according to an embodiment of this application;
FIG. 5 is an interaction diagram of a network service method according to an embodiment of this application;
FIG. 6 is an interaction diagram of another network service method according to an embodiment of this application;
FIG. 7 is an interaction diagram of still another network service method according to an embodiment of this application;
FIG. 8 is a diagram of a structure of a communication apparatus according to an embodiment of this application;
FIG. 9 is a diagram of a structure of another communication apparatus according to an embodiment of this application; and
FIG. 10 is a diagram of a structure of still another communication apparatus according to an embodiment of this application.

### DESCRIPTION OF EMBODIMENTS

To make objectives, technical solutions, and advantages of this application clearer, the following describes embodiments of this application with reference to the accompanying drawings in embodiments of this application.

The terms "first", "second", and the like in the specification, claims, and accompanying drawings of this application are used to distinguish between different objects, but are not used to describe a specific sequence. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or candidate embodiment exclusive from another embodiment. A person skilled in the art can explicitly and implicitly understand that in embodiments of this application, unless otherwise specified or a logical conflict occurs, terms and/or descriptions in embodiments are consistent and may be mutually referenced, and technical features in different embodiments may be combined based on an internal logical relationship thereof to form a new embodiment.

It should be understood that in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

Technical solutions in embodiments of this application may be applied to various communication systems, for example, a long term evolution (long term evolution, LTE) system, a universal mobile telecommunications system (universal mobile telecommunications system, UMTS), a 5^{th} generation (5^{th} generation, 5G) system, a new radio (new radio, NR) system, and another new system emerging with development of technologies.

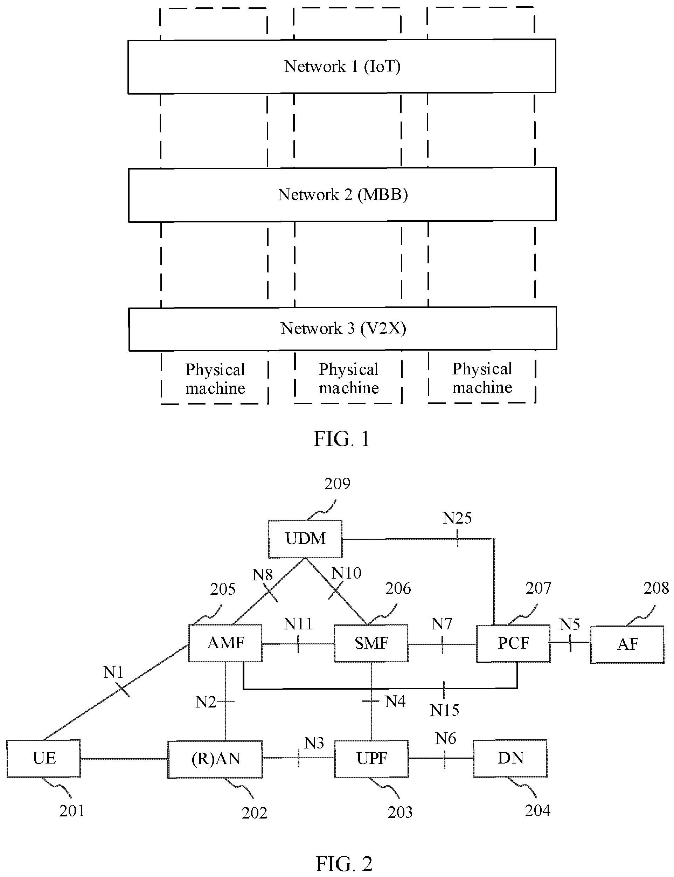

A 5G network may be logically divided into different subnets (that is, network slices) by using a virtualization technology, to provide a differentiated network connection service for a user. Different subnets may use a same network device (for example, a physical machine), so that network deployment costs can be reduced, and a network can be flexibly deployed. As shown in FIG. 1, in a 5G core network, a physical network may be divided into different virtual networks by using a virtualization technology, for example, internet of things (Internet of Things, IoT), mobile broadband (mobile broadband, MBB), and vehicle to everything (vehicle to everything, V2X).

FIG. 2 shows an example of a 5G network architecture. As shown in FIG. 2, the system may be divided into two parts: an access network and a core network (core network, CN). The access network is used to implement a function related to radio access, and mainly includes an access network (access network, AN) device 202. The access network device includes a radio access network (radio access network, RAN) device and another device (for example, Wi-Fi) that is accessed through an air interface. The core network mainly includes the following key logical network elements (or referred to as network functions (network function, NF)): a user plane function (user plane function, UPF) 203, an access and mobility management function (access and mobility management function, AMF) 205, a session management function (session management function, SMF) 206, a policy control function (policy control function, PCF) 207, and a unified data management function (unified data management, UDM) 209. The system may further include one or more of user equipment (user equipment, UE) 201, a data network (data network, DN) 204, and an application function (application function, AF) 208. Interfaces between the network elements are shown in FIG. 2. It should be understood that the network elements may alternatively communicate with each other through a service-oriented interface.

The UE may also be referred to as a terminal device. The terminal device may communicate with one or more core networks (core network, CN) by using the AN device. The terminal device may be referred to as an access terminal, a terminal, a subscriber unit, a subscriber station, a mobile station, a remote station, a remote terminal, a mobile device, a user terminal, a wireless network device, a user agent, or a user apparatus. The terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another device connected to a wireless modem, a vehicle-mounted device, a wearable device, a terminal device in an internet of things, a terminal device in an internet of vehicles, a terminal device in any form in a future network, or the like.

The AN device is a device that connects a terminal device to a wireless network, may also be referred to as an access network device, a network device, a RAN node, or the like, and may be specifically a base station. There may be various forms of base stations, for example, a macro base station, a micro base station (also referred to as a small cell), a relay station, and an access point. Specifically, the base station may be an access point (access point, AP) in a wireless local area network (wireless local area network, WLAN), a base station (base transceiver station, BTS) in a global system for mobile communications (global system for mobile communications, GSM) or code division multiple access (code division multiple access, CDMA), a base station (NodeB, NB) in wideband code division multiple access (wideband code division multiple access, WCDMA), an evolved NodeB (Evolved NodeB, eNB or eNodeB) in LTE, a relay station or an access point, a vehicle-mounted device, a wearable device, a next generation NodeB (the next generation NodeB, gNB) in a 5G system, a base station in a future evolved public land mobile network (public land mobile network, PLMN), an access network device in an open access network ORAN (open RAN, ORAN) system, a module of an access network device, a base station in a future mobile communication system, an access node in a Wi-Fi system, or the like.

Optionally, in some deployments of the access network device, the access network device may include a central unit (central unit, CU), a distributed unit (distributed unit, DU), and the like. In some other deployments of the access network device, the CU may further be divided into a CU-control plane (control plane, CP), a CU-user plane (user plane, UP), and the like. In still some other deployments of the access network device, the access network device may alternatively be an antenna unit (radio unit, RU) or the like. In still some other deployments of the access network device, the access network device may alternatively be of an open radio access network (open radio access network, ORAN) architecture or the like. A specific deployment manner of the access network device is not limited in embodiments of this application. For example, when the access network device is of the ORAN architecture, the access network device shown in embodiments of this application may be an access network device in an ORAN, a module in an access network device, or the like. In an ORAN system, the CU may also be referred to as an open (open, O)-CU, the DU may also be referred to as an O-DU, a CU-CP may also be referred to as an O-CU-CP, the CU-UP may also be referred to as an O-CU-UP, and the RU may also be referred to as an O-RU.

The UDM has functions such as user subscription data management and user certification information generation.

The AMF is mainly responsible for functions such as UE registration management, UE connection management, UE reachability management, UE access authorization and access authentication, UE security functionality, UE mobility management, network slice (network slice) selection, and SMF selection. The AMF serves as an anchor of an N1/N2 interface signaling connection, provides the SMF with routing of an N1/N2 interface session management (session management, SM) message, and maintains and manages status information of the UE. The AMF is a mobility management network element in the 5G system.

The SMF is mainly responsible for all control plane functions in session management of the UE. The control plane functions include UPF selection and control, internet protocol (internet protocol, IP) address assignment and management, quality of service (quality of service, QoS) management of a session, and obtaining of a policy and charging control (policy and charging control, PCC) policy from the PCF. The SMF also serves as a termination of an SM part in a non-access stratum (non-access stratum, NAS) message.

The PCF has functions of providing a policy rule to a control plane functional entity and the like.

The AF may be an application server, and may belong to an operator or a third party.

The UPF is mainly responsible for processing a user packet, for example, forwarding and charging. The UPF may serve as an anchor of a protocol data unit (protocol data unit, PDU) session (session) connection, namely, a PDU session anchor (PDU session anchor, PSA), and is responsible for data packet filtering, data transmission/forwarding, rate control, charging information generation, QoS handling for the user plane, uplink transmission authentication, transmission class verification, downlink data packet buffering, downlink data notification triggering, and the like of the UE. The UPF may also serve as a branching point of a multi-homed (multi-homed) PDU session.

The DN is a network providing a user with a data transmission service, for example, an IP multimedia service (IP Multi-media service, IMS) or an internet. The DN may include an application server (application server, AS). The AS is a software framework, provides an environment in which an application program runs, and is configured to provide the application program with services such as security, data, transaction support, load balancing, and large-scale distributed system management. The UE communicates with the AS to obtain an application packet. It should be noted that the AF is a control plane of the AS.

It should be understood that embodiments of this application are not limited to being applied to the system architecture shown in FIG. 1. For example, a communication system to which a message transmission method in embodiments of this application may be applied may include more or fewer network elements or devices. The devices or the network elements in FIG. 1 may be hardware, or may be software obtained through functional division or a combination of the hardware and the software. The devices or the network elements in FIG. 1 may communicate with each other via another device or network element.

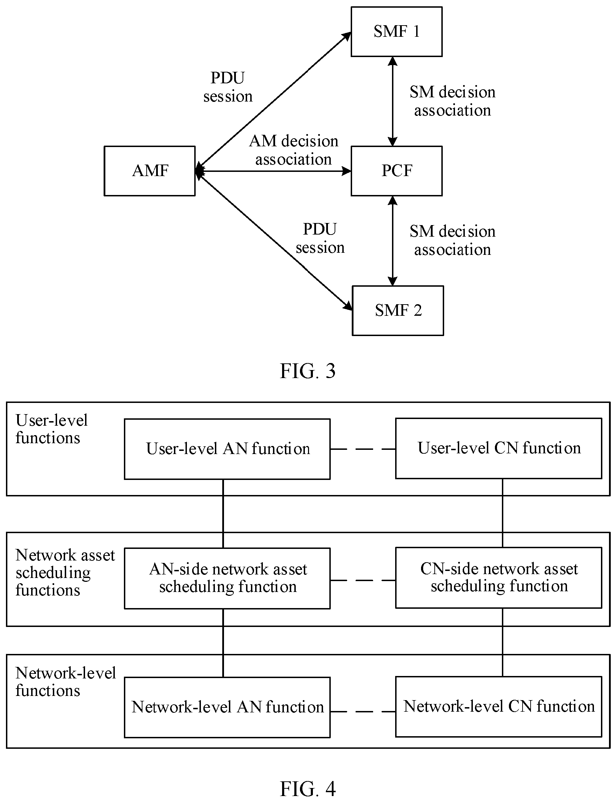

For example, interaction logic of the AMF, the SMF, and the PCF is shown in FIG. 3. The AMF is configured to manage an access and mobility management context (AM context) of the UE. The SMF is configured to manage a session management (SM) context of the UE. The PCF is used to configure a related policy for a network element (for example, the AMF or the SMF) in a network, for example, an access and mobility management policy or a session management policy. An AM policy association (AM policy association) may be established between the AMF and the PCF, an SM policy association may be established between the PCF and the SMF (for example, an SMF 1 and an SMF 2), and a PDU session may be established between the AMF and the SMF.

In a 5G network, a differentiated network service may be provided for a user by using a non-public network (Non-Public Network, NPN) and a network slice. The NPN may include: a stand-alone non-public network (Stand-alone Non-Public Network, S-NPN) and a public network integrated NPN (Public Network Integrated Non-Public Network, PNI-NPN). For example, the public network integrated NPN may be implemented based on a network slice. For related descriptions of the SNPN and the PNI-NPN, refer to Table 1.

**Table 1**

| | SNPN | PNI-NPN |
|---|---|---|
| Network identifier | PLMN identifier (identity, ID) and network identifier (network ID, NID) | PLMN ID and closed access group (closed access group, CAG) ID |
| Spectrum resource | Dedicated network spectrum | Operator spectrum |
| Operation and maintenance | Maintainable by enterprises, with good confidentiality | Generally maintained by a public network provider, and more flexible |
| Security | Separated network, high security | End-to-end security provided by an operator |
| Roam | No interoperability with a public network | The NPN and the PLMN may be switched |
| Deployment costs | Higher | Lower |
| Applicable scenario | Large-sized enterprises or enterprises that require self-network construction | Small-sized enterprises or enterprises that do not require self-network construction |
| Deployment mode | The SNPN may be regarded as a regional PLMN, and the CN and RAN are deployed independently | 1. The NPN and the PLMN share a RAN, and other network functions are isolated |
| | | 2. The RAN and a control plane (control plane, CP) are shared by using network slices or data network names (data network name, DNN) |
| | | 3. The NPN hosted by a public network is implemented by using a network slice or a DNN function |

For example, the SNPN network and the PNI-NPN network may use a network architecture of a 5G network, that is, the network architecture of the SNPN network and the network architecture of the PNI-NPN network may be shown in FIG. 2.

In the foregoing SNPN network, a user needs to independently deploy a network device, and deployment costs are high. The PNI-NPN network inherits the implementation of network slices. The network architecture of the PNI-NPN network depends on the operator, and the user cannot control operation. Generally, the NPN is isolated from the PLMN, to be specific, a service of the non-public network is independent of a data service of the PLMN network. A service accepted by a user in the NPN is provided by the NPN. In this manner, the service accepted by the user in the NPN relies on a capability of the NPN. When the capability of the NPN is limited, the service of the user is affected. Therefore, how to provide a better network service for the user is a problem that needs to be urgently resolved.

FIG. 4 is a diagram of a network architecture according to an embodiment of this application. As shown in FIG. 4, the network architecture may include a user-level function, a network-level function, and a network asset scheduling function. A service object of the user-level function is a particular user, to be specific, the user-level function is used to provide a dedicated network service for the particular user. A service object of the network-level function is any user or network element in a network, to be specific, the network-level function may provide a network service for the network element or the user in the network. The network asset scheduling function is configured to schedule a network service or a network resource in a network. The user-level function and the network-level function may invoke a service mutually by using the network asset scheduling function.

For example, the user-level function may be controlled and managed by a user, and the network-level function may be controlled and managed by a network device provider (for example, an operator). For example, the operator may deploy a network bottom-layer device, and the user may develop and deploy the user-level function based on the network bottom-layer device to provide a dedicated network service for the user.

For example, the user-level function may be a set of network functions, or may be a network node (or referred to as a user-level node) having a plurality of network functions. The user-level function may provide a dedicated network service for a user in a subnet. For example, the user-level function may include one or more network functions, configured to provide a user-dedicated network service for the user in the subnet. For another example, the user-level function may store static and/or steady-state data of the user in the subnet, and perform a corresponding operation based on a user request or a network function request in the subnet or an external request of the subnet.

For example, the subnet is a user-dedicated network, and may also be referred to as user space. The user space may include one or more network functions, and the one or more network functions have a same network identifier. The one or more network functions may provide a differentiated network service for a user in the user space. The one or more network functions may include at least one of the following: a connection service function, a data service function, a computing service function, a perception service function, and the like.

For example, the user space may provide a dedicated network service for the user by using the one or more network functions. For example, the data service function may provide a dedicated storage service for the user in the user space to ensure that user data is stored only in the user space, ensuring data security. For another example, the user space may provide a dedicated artificial intelligence (artificial intelligence, AI) model training service for the user by using user behavior data collected by the data service function.

In an implementation, a service provided by the user space may be controlled by a user in the user space. A network function in the user space is deployed by the user space and is not scheduled by an operator network, so that the user has independent network space in a mobile network, and has sovereignty and operation rights over the user space. Therefore, a network can be flexibly configured based on a user requirement.

In another implementation, a network environment and a network function of the user space may be provided by an operator network. For example, the user may initiate a subscription request (for example, the user purchases a telephone card provided by an operator, or performs subscription by using a web page or a client provided by the operator) to the operator network, to request the operator network to provide the user with a network environment and a network service (that is, user space) that are exclusive to the user. The subscription request may include subscription information of the user, and the operator network provides corresponding user space for the user based on the subscription information of the user. The subscription information of the user may include a service function or a module function provided by the user space for the user. For example, the user space provided by the operator network for the user may provide the user with a connection function of a bandwidth, a computing function having a capability, a storage function having a capacity, and the like. For example, within a validity period of the subscription information of the user, the user space is managed and controlled by the user.

In this application, the operator network may be understood as a network controlled and managed by a network device.

For example, a granularity of the user space may be a user (group) granularity, a service granularity, or a network-level granularity. For example, the user space may be UE, or may be a network providing a dedicated network service for a particular user, for example, a home network, a campus network, or a stadium network. Alternatively, the user space may be a network configured to perform a particular service. For example, the user space is a network configured to collect location information. In this application, the user space may provide network capabilities of different scales based on a user requirement.

For example, the user space may belong to one or a group of users, and one or more users may control and manage the user space. For example, in a home network, a family member may add a guest to the home network, so that the guest can use a service of the home network.

In this application, the user space may be the NPN described above, or may be a network configured as a user-dedicated network. The "user space" in this application is merely a name of a user-dedicated network, and a name of the user-dedicated network is not limited in this application.

In this application, a network function included in the user space may also be referred to as a user-level function.

For example, the network asset scheduling function is configured to discover a corresponding network-level function or schedule a corresponding network resource for the user space. The network-level function may provide a corresponding network-level service for the user space. The user space and the network-level function may interact with each other by using the network asset scheduling function, to mutually invoke the user space and the network-level function. For example, the network-level function may invoke data or a service in the user space. For another example, user space and user space may also interact with each other by using the network asset scheduling function. For example, different user space may access each other, invoke a service, exchange data, or the like.

For example, the network-level function may include a session management function (session management function, SMF) and a user plane function. When a user in the user space needs to access a mobile network, the user may initiate a connection service request to the user space. The user space may discover the SMF and the user plane function through network asset scheduling, and request a connection service from the SMF. Then, the SMF establishes a connection channel for the UE by configuring the user plane function and a connection function on a base station side.

It may be understood that the interaction between the user space and the network-level service may be interaction between the user-level function and the network-level function in the user space.

The "user-level network function" in this application may alternatively be described as "user-service-oriented network function", "user-service-oriented function", "user-level network function", or the like. It may be understood that the user-level function is only a name of a network function that can provide a user-dedicated network service for a user in this application, and the name of the network function providing the dedicated network service for the user is not limited in this application.

The "network-level function" in this application may alternatively be described as "network-service-oriented network function", "network-service-oriented function", "network-level network function", or the like. It may be understood that the network-level function is only a name of a network function that can provide a network service for a user or a network element in this application, and the name of the network function providing the network service for the user or the network element is not limited in this application.

The "network asset scheduling function" in this application may alternatively be described as "asset scheduling function", "asset scheduling network function", "network scheduling function", or the like. It should be understood that the network asset scheduling function is only a name of a network function that can schedule a network service or a network resource in a network in this application, and the name of the network function scheduling the network service or the network resource in the network is not limited in this application.

In this application, a mobile network may include one or more networks (which may also be referred to as network domains), and each network domain includes a network asset scheduling function to schedule a network service and a network resource in a corresponding network domain. In a possible implementation, the mobile network may include two network domains: an access network and a core network. The user-level function may include a user-level AN (User-AN) function and a user-level CN function. The network-level function may include a network-level AN function and a network-level CN function. The network asset scheduling function may include an AN-side network asset scheduling function and a CN-side network asset scheduling function. The user-level AN function, the AN-side network asset scheduling function, and the network-level AN function are included in the access network. The user-level CN function, the CN-side network asset scheduling function, and the network-level CN function are included in the core network.

On an access network side, the user-level AN function, the AN-side network asset scheduling function, and the network-level AN function may be deployed in a same access network device or different access network devices. The AN-side network asset scheduling function is configured to schedule a network service or a network resource in the access network. For example, the network-level AN function may provide a physical layer access service and an air interface resource scheduling service. The user-level AN function may provide a data or service mapping and a security assurance service, for example, an AI model training service, a data service, a perception service, a connection service, and an air interface security service.

For example, an operator may deploy a bottom-layer device (for example, a physical communication antenna or a sensor having a perception capability) on the access network side, and deploy a corresponding network function (for example, a resource scheduling function or a perception function). A user may develop and deploy a corresponding user-level AN function based on the bottom-layer device, and invoke, by using the user-level AN function, the bottom-layer device of the operator to provide a dedicated access network service for a user in the same user space.

In some possible implementations, the user-level function may be deployed by an operator. For example, after the user accesses the access network, the access network allocates, to the user, a network function (that is, the user-level function) providing a dedicated network service for the user. For example, the user may subscribe to the access network to rent a network function deployed by an operator on the access network side. During the period when the user rents the network function, the network function is managed and controlled by the user. In this implementation, the user may alternatively schedule the bottom-layer device by using the network function deployed by the operator to provide a dedicated access network service for a user in the same user space, and the network function does not need to be reconstructed, thereby reducing network deployment costs.

For example, the user-level AN function, the AN-side network asset scheduling function, and the network-level AN function may be included in CUs (or O-CUs) of a same access network device or different access network devices. Alternatively, when the user space and the access network may share a hardware device, the user-level AN function, the AN-side network asset scheduling function, and the network-level AN function may be included in CUs (or O-CUs) or DUs (or O-DUs) of a same access network device or different access network devices. For example, in the user space, a physical device such as a sensor may be deployed in the access network, and the user-level AN service may be included in a CU (or an O-CU) or a DU (or an O-DU) of an access network device.

On the core network side, the CN-side network asset scheduling function is configured to schedule a network service (for example, schedule a network-level CN function service) and a network resource in the core network. The user-level CN function may provide a user-level CN service (for example, an AI model training service, a data service, a perception service, or a connection service) for the user. The user can independently control and manage the user-level CN function to independently formulate a policy and manage data. The network-level CN function may provide a network-level CN service, such as a user space life cycle management service. For example, the network-level CN function may include a network function in a 5G core network, for example, an AMF, an SMF, a PCF, UDM, an AF, and a control user plane function (user plane function, UPF).

In some implementations, the CN domain can also include one or more core network internal domains. The core network internal domain may include a control plane domain and a user plane domain, or another newly added core network internal domain (for example, an intelligent plane domain, a computing plane domain, and a data plane domain). Each of the one or more core network internal domains may include one network asset scheduling function. The core network internal domains may mutually invoke network functions in different core network internal domains based on the network asset scheduling function. It may be understood that the core network internal domain is merely a name of a subnet that is in the core network and that includes the network asset scheduling function in this application, and the name of the subnet that is in the core network and that includes the network asset scheduling function is not limited in this application.

In this application, the user-level AN function and the user-level CN function may be included in the user space, and are used as a part of the user space to provide a dedicated network service for the user. For example, when the user space needs to request a network-level function service, the user space may send a request to the CN-side network asset scheduling function by using the user-level CN function, or send a request to the AN-side network asset scheduling function by using the user-level AN function, to send a corresponding network-level function by using the CN-side network asset scheduling function or the AN-side network asset scheduling function.

In some possible implementations, a network function in the core network and a network function in the access network may communicate with each other. The user-level CN function or the user-level AN function in the user space may send a request to the CN-side network asset scheduling function or the AN-side network asset scheduling function, to send a corresponding network-level function by using the CN-side network asset scheduling function or the AN-side network asset scheduling function.

It may be understood that the access network and the core network that are described above are merely examples. A network architecture in this application is not limited to the access network and the core network, and may further include a new network emerging with technology development. Therefore, the access network and the core network that are shown above should not be understood as limitations on implementation of this application.

It may be understood that the mobile network may not be divided into network domains based on the access network and the core network. For example, in the mobile network, a user plane function may form a network domain, a function related to a computing service may form a network domain, and a data management service function may form a network domain.

In embodiments of this application, the mobile network may provide a dedicated user space service for the user based on a user requirement, an independent network function may be deployed in the user space, and the mobile network and the user space are independent of each other, so that the user has independent network space in the mobile network and has sovereignty and operation rights over the user space, a network can be flexibly customized for the user, and user data security can be ensured.

The method provided in embodiments of this application may be applied to the communication system shown in FIG. 4. Alternatively, the method provided in embodiments of this application may be applied to a first network element, a second network element, a third network element, or a fourth network element. The first network element may be the network asset scheduling function described above. The second network element may be the user-level function described above. The third network element may be the network-level function described above. The fourth network element may be the network asset scheduling function described above.

It may be understood that a network element in this application, for example, the first network element, the second network element, the third network element, or the fourth network element, may be simply understood as an element in a network, and is a minimum unit that can be monitored and managed in network management. A network element may be a set that includes one or more disks or subracks and that can independently complete a transmission function.

It should be noted that in this application, "sending information to... (an X^{th} network element)" may be understood as that a destination end of the information is the X^{th} network element, and may include directly or indirectly sending the information to the X^{th} network element. "Receiving information from... (the X^{th} network element)" may be understood as that a source end of the information is the X^{th} network element, and may include directly or indirectly receiving the information from the X^{th} network element. Necessary processing may be performed on information between a source end and a destination end of information sending, but the destination end can understand valid information from the source end. Similar descriptions in this application may be understood similarly. Details are not described herein again.

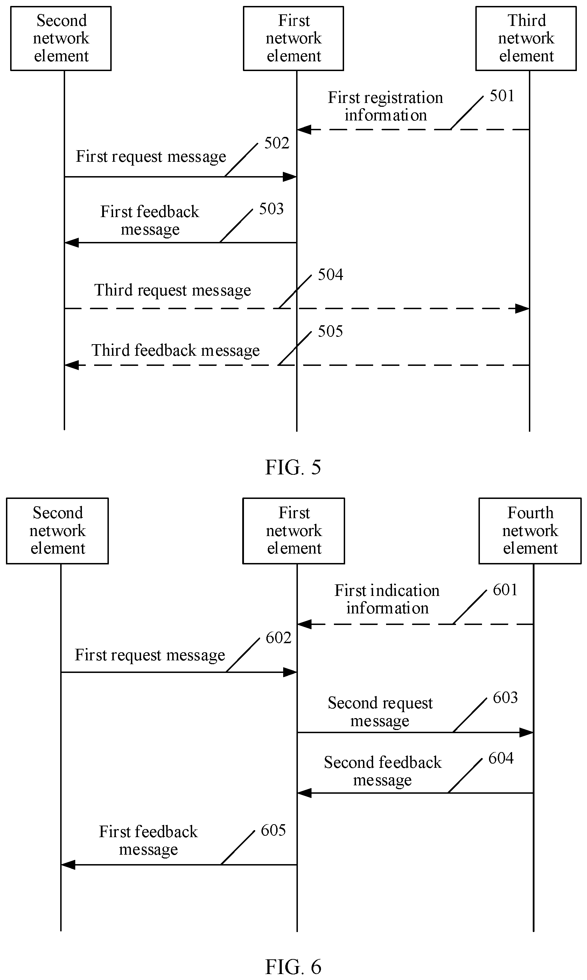

FIG. 5 is an interaction diagram of a network service method according to an embodiment of this application. As shown in FIG. 5, the method includes but is not limited to the following steps.

In a possible implementation, the method shown in FIG. 5 includes step 501.

501: A third network element sends first registration information; and correspondingly, a first network element receives the first registration information, where the first registration information is used to register a first network service of the third network element with the first network element.

The first network element is configured to schedule a network service in a first network. The third network element is included in the first network.

For example, the third network element may register, with the first network element, a network service provided by the third network element or a network function shared by the third network element, so that another network element (for example, a second network) can invoke the network service provided by the third network element or use the network function shared by the third network element. For example, the third network element is an access network element, and the first network service may include one or more of a connection resource management service, a perception service, and a mobility management service. For another example, the third network element is a core network element, and the first network service may include one or more of an access management service, a session management service, a data analysis service, and a charging service.

For example, the first network element is a network asset scheduling function in the first network element. It may be understood that the third network element may register, with a network asset scheduling function in a network in which the third network element is located, a network service provided by the third network element. When the third network element is not included in the first network, the method shown in FIG. 5 may not include step 501.

In this embodiment of this application, when the third network element is included in the first network, the third network element may register, with the first network element, a network service that can be provided by the third network element or a network function that can be shared by the third network element, so that the first network element can schedule the network service and the network function of the third network element.

502: A second network element sends a first request message; and correspondingly, the first network element receives the first request message. The first request message is used to request the first network service, the first network element is configured to schedule the network service in the first network, and the second network element is configured to provide a service for a user in a second network.

For example, the first network element may be configured to schedule the network service or a network resource in the first network. The first network element may be the network asset scheduling function described above, for example, the CN-side network asset scheduling function or the AN-side network asset scheduling function. The first network may be included in an access network or a core network. For example, the first network may be a subnet in the access network or the core network. For example, the first network may be a network including one or more base stations (or access network devices) in the access network.

For example, the second network element may be included in the second network, and is configured to provide a dedicated network service for the user in the second network. The second network may be a non-public network, that is, the second network is a user-dedicated network. The non-public network may be the NPN or the user space that are described above. The second network element may be included in the second network. For example, the second network element may be the user-level function described above. For example, the second network element is the user-level CN function or the user-level AN function described above.

For example, the second network element may send the first request message to the first network element based on a request of the user in the second network or an internal trigger mechanism of the second network. The first request message may include a service type, a data type, and the like of the first network service. The first request message is used to request to provide the first network service for the second network element or the user in the second network.

For example, the first request message is used to request the first network service, or the first request message is used to request information about the network element providing the first network service. For example, the first network service includes at least one of the following: an access management service, a session management service, a data analysis service, a charging service, a connection resource management service, a perception service, and a mobility management service.

For example, the first network and the second network may belong to a same operator, and the first network element and the second network element may be deployed in a same network device. For example, the first network element is an AN-side network asset scheduling function, the second network is a user-level AN function, and the first network element and the second network may be deployed in a same access network device.

In a possible implementation, the second network element is a user-level CN function, and the first network element is a CN-side network asset scheduling function. Alternatively, the second network element is a user-level AN function, and the first network element is an AN side network asset scheduling function. In this implementation, the second network element may send the first request message to a network asset scheduling function in a network domain corresponding to the second network element. For example, when the second network element is a core network element (for example, a user-level CN function), the second network element may send the first request message to a CN-side network asset scheduling function; or when the second network element is an access network element (for example, a user-level AN function), the second network element may send the first request message to an AN-side network asset scheduling function.

In another possible implementation, the second network element may be a user-level CN function or a user-level AN function, and the first network element may be a CN-side network asset scheduling function or an AN-side network asset scheduling function. In this implementation, a network function in the access network and a network function in the core network may communicate with each other, and the second network element may communicate with the CN-side network asset scheduling function and/or the AN-side network asset scheduling function. For example, the second network element may send a request message based on specific request content of a service and the AN-side network asset scheduling function or the CN-side asset scheduling function.

For example, if the user in the second network requests to use a radio resource of a radio base station, the second network element may send a session establishment request to the CN-side asset scheduling function, and send a radio resource request to the AN-side network asset scheduling function. Alternatively, the second network element may send a session establishment request to the CN-side network asset scheduling function, and then the CN-side network asset scheduling function sends a radio resource scheduling request to the AN-side network asset scheduling function.

For another example, if the user in the second network requests to use a computing service outside the second network (for example, the core network or the access network), the second network element may request a computing resource from the AN-side network asset scheduling function and/or the CN-side asset scheduling function.

503: The first network element sends a first feedback message; and correspondingly, the second network element receives the first feedback message. The first feedback message includes information about the third network element or a service result of the first network service, and the third network element provides the first network service.

For example, the third network element may be included in the first network, or may not be included in the first network. The third network element may include the network-level function described above, for example, the network-level AN function or the network-level CN function. The information about the third network element may include address information (such as an internet protocol (Internet protocol, IP) address, a full qualified address domain name (full qualified domain name, FQDN), a port number, and a layer 2 address) and/or identification information (such as a network element identifier and a network function instance identifier) of the third network element. The service result of the first network service is a result of providing the first network service by the third network element. For example, the first network service includes a data service, that is, the first request message is used to request service data, and the service result may include corresponding service data.

In a possible implementation, the first feedback message includes the information about the third network element. After receiving the first request message, the first network element discovers, for the second network element, the third network element providing the first network service.

For example, the third network element may be included in the first network, or may not be included in the first network. After receiving the first request message, the first network element may determine whether the first network includes the network element providing the first network service. When the first network includes the network element providing the first network service, the first network element may send, to the second network element by using the first feedback message, the information about the third network element providing the first network service. When the first network does not include the network element providing the first network service, the first network element may send a second request message to a network asset scheduling function (for example, a fourth network element) in another network (for example, a third network) to request, from the another network, the information about the third network element providing the first network service.

In another possible implementation, the first feedback message includes the service result of the first network service. After receiving the first request message, the first network element determines the third network element providing the first network service in the first network. For example, the first network element may forward the first request message to the third network element, or send a third request message to the third network element based on the first request message, where the third request message is used to request the first network service. The third network element may feed back the service result of the first network service to the first network element, and then the first network element feeds back the service result to the second network element by using the first feedback message. For example, the service result includes whether the third network element successfully provides (or agrees to provide) a second network service for the second network element or the user in the second network. For example, the first network service includes a radio access service, and the service result of the first network service includes an access success or an access failure. That is, the first request message is used to request to provide the radio access service for the user in the second network. After receiving the first request message, the first network element may forward the first request message to the third network element (for example, a connection resource management function) providing the radio access service, so that the third network element may allocate a radio resource to the user in the second network, establish a session, and so on. When the third network element successfully allocates the radio resource to the user in the second network and activates the session, the service result may include an access success. When the third network element fails to allocate the radio resource to the user in the second network and activate the session, the service result may include an access failure, a cause of the access failure, and the like.

In this embodiment of this application, the second network element may discover and invoke, by using the first network element, a network service provided by a network element (for example, the third network element) in another network, so that cross-network scheduling of the network service is implemented, the network service accepted by the user in the second network is not limited to a capability of the second network, and the network service can be better provided for the user in the second network.

In a possible implementation, the first feedback message includes the information about the third network element, and the method shown in FIG. 5 further includes step 504 and step 505.

504: The second network element sends a third request message; and correspondingly, the third network element receives the third request message, where the third request message is used to request the first network service.

505: The third network element sends a third feedback message; and correspondingly, the second network element receives the third feedback message, where the third feedback message includes the service result of the first network service.

In this embodiment of this application, the first network element may send the information about the third network element to the second network element, and then the second network element sends a request message of the first network service to the third network element, so that the third network element can provide the first network service for the second network element, the cross-network scheduling of the network service is implemented, the network service accepted by the user in the second network is not limited to the capability of the second network, and the network service can be better provided for the user in the second network.

In this application, "sending information to... (a network element)" may be understood as that a destination end of the information is the network element, and may include directly or indirectly sending the information to the network element. "Receiving information from... (the network element)" may be understood as that a source end of the information is the network element, and may include directly or indirectly receiving the information from the network element. Necessary processing may be performed on information between the source end and the destination end of information sending. For example, the information is forwarded by a forwarding apparatus. For another example, one or more processing items such as encoding and modulation may be performed on the information at the source end of information sending. For another example, one or more processing items such as decoding and demodulation may be performed on the information at the destination end of information sending, but the destination end can understand valid information from the source end. Similar descriptions in this application may be understood similarly. Details are not described herein again.

FIG. 6 is an interaction flowchart of another network service method according to an embodiment of this application. As shown in FIG. 6, the method includes but is not limited to the following steps.

In a possible implementation, the method shown in FIG. 6 includes step 601.

601: A fourth network element sends first indication information; and correspondingly, a first network element receives the first indication information, where the first indication information indicates that a third network element provides a first network service.

The fourth network element is configured to schedule a network service in a third network. The third network element is included in the third network. For example, the fourth network element may be the network asset scheduling function described above, for example, a CN-side network asset scheduling function or an AN-side network asset scheduling function. The third network may be included in an access network or a core network. For example, the third network may be a network including one or more access network devices in the access network. For another example, the third network may be a network including one or more network elements (network functions) in the core network.

For example, the third network element may register the first network service of the third network element with the fourth network element. After receiving registration information of the third network element, the fourth network element may notify, by using the first indication information, the first network element that the third network element provides the first network service. For example, the first indication information may indicate that the first network element may invoke the first network service provided by the third network element.

For example, the first indication information may include the registration information of the third network element. After receiving the registration information of the third network element, the fourth network element may share the registration information of the third network element with the first network element by using the first indication information, so that the first network element can schedule the first network service provided by the third network element.

602: A second network element sends a first request message; and correspondingly, the first network element receives the first request message.

603: The first network element sends a second request message; and correspondingly, the fourth network element receives the second request message, where the second request message is used to request the first network service from the fourth network element.

For example, when a network element providing the first network service does not exist in a first network, the first network element sends the second request message to the fourth network element to request the first network service from the fourth network element.

It may be understood that after receiving the first request message, the first network element may further forward the first request message to the fourth network element. That is, specific request content included in the second request message is the same as that included in the first request message.

In a possible implementation, the first network element may determine, based on the first indication information, that the third network includes the third network element providing the first network service, and send the second request message to the fourth network element.

In this implementation, the first network element may determine, based on the first indication information, that the third network includes the third network element providing the first network service, so that the first network element can quickly send a corresponding request message to the fourth network element when requiring the first network service, thereby improving network service efficiency.

In another possible implementation, the first request message may include location information, and the first network element may determine the fourth network element corresponding to the location information. For example, the first network element may be a CN-side network asset scheduling function. A user needs to request sensor data in a first area on an access network side. The user space may send a first request message to the CN-side network asset scheduling function by using a user-level CN function. The first request message may include location information of the first area, and is used to request the sensor data in the first area. The CN-side network asset scheduling function may send, based on the location information of the first area, a second request message to the AN-side network asset scheduling function (that is, the fourth network element) corresponding to the first area.

In this implementation, the first network element may determine, based on the location information carried in the first request message, a network corresponding to the location information, and send a request message to a network asset scheduling function in the network corresponding to the location information. By using the location information included in the first request message, the first network element can accurately discover a network that can provide the first network service for the second network element, to avoid a case in which the first network element sends a request to a network asset scheduling function in another network but the another network cannot provide the first network service for the second network element.

In a possible implementation, the first network element is an access network element, the fourth network element is a core network element, and the third network element includes at least one of the following network functions: an access management function, a session management function, a data analysis function, and a charging function. In this implementation, the first network element is an access network element (for example, an AN-side network asset scheduling function), that is, the first network is an access network side network, or the first network is included in the access network. The fourth network element is a core network element (for example, a CN-side network asset scheduling function), that is, the third network is a core network side network, or the third network is included in the core network. The third network element is included in the third network, that is, the third network element is a core network element (for example, a network-level CN function).

In another possible implementation, the first network element is a core network element, the fourth network element is an access network element, and the third network element includes at least one of the following network functions: a connection resource management function, a perception function, and a mobility management function. In this implementation, the first network element is a core network element (for example, a CN-side network asset scheduling function), that is, the first network is a core network side network, or the first network is included in the core network. The fourth network element is an access network element (for example, an AN-side network asset scheduling function), that is, the third network is an access network side network, or the third network is included in the access network. The third network element is included in the third network, that is, the third network element is an access network element (for example, a network-level AN function).

It may be understood that the network function included in the third network element is merely an example. The network function included in the third network element in this application is not limited to the foregoing several examples, and may further include another new network function emerging with technology development. Therefore, the several network functions shown above should not be understood as limitations on implementation of this application.

In this embodiment of this application, the first network element and the fourth network element may respectively schedule the network service of the access network and the network service of the core network, and implement mutual invocation of the network services of the access network and the core network based on interaction between the first network element and the fourth network element.

604: The fourth network element sends a second feedback message to the first network element; and correspondingly, the first network element receives the second feedback message, where the second feedback message includes information about the third network element or a service result of the first network service.

For example, after receiving the second request message, the fourth network element may forward the second request message to the third network element, so that the third network element provides the first network service for the second network element. The fourth network element receives a feedback message returned by the third network element, where the second feedback message includes the service result of the first network service. The fourth network element forwards the feedback message (namely, the second feedback message) to the first network element. Alternatively, after receiving the second request message, the fourth network element determines the third network element providing the first network service, and sends the information about the third network element to the first network element by using the second feedback message.

605: The first network element sends a first feedback message; and correspondingly, the second network element receives the first feedback message.

For example, after receiving the second feedback message, the first network element may forward the second feedback message to the second network element. That is, specific content in the first feedback message is the same as that in the second feedback message, and transceiver ends are different.

For example, when the first feedback message includes the information about the third network element, after receiving the first feedback message, the second network element may send a third request message to the third network element based on the first feedback message. The third request message is used to request the first network service. The third network element provides the first network service for the second network element based on the third request message, and sends a third feedback message to the second network element. The third feedback message includes the service result of the first network service.

In this embodiment of this application, network services between different networks may be mutually invoked by using asset scheduling functions (for example, the first network element and the fourth network element) in different networks, thereby improving network service efficiency.

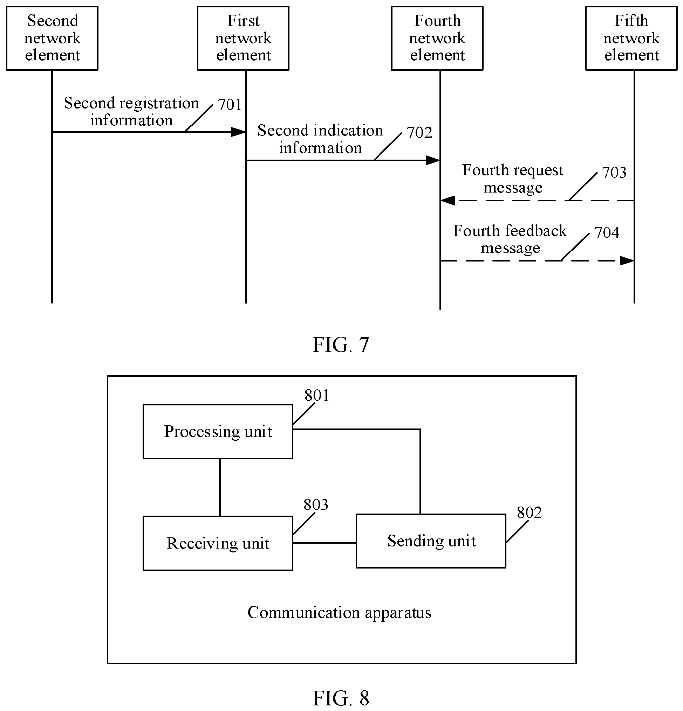

FIG. 7 is an interaction diagram of still another network service method according to an embodiment of this application. As shown in FIG. 7, the method includes but is not limited to the following steps.

701: A second network element sends second registration information; and correspondingly, a first network element receives the second registration information, where the second registration information is used to register with or cancel a second network service of a second network with the first network element.

For example, the second network may be the user space described above, the second network element may be the user-level function described above, and the first network element may be the network asset scheduling function described above. The user space may register, with the network asset scheduling function, a network service or a network function opened by the user space. The user space may register the second network service with the network asset scheduling function by using the user-level function, so that another network element or another user space in a mobile network can invoke the second network service.

For example, when determining the second network service that can be opened to the outside, the second network may send the second registration information to the first network element by using the second network element to register the second network service of the second network with the first network element. After receiving the second registration information, the first network element registers the second network service of the second network. For example, the first network element may store a correspondence between the second network and the second network service. For another example, the first network element may record the second registration information by using a configuration file, a context, or a query table of the second network or the second network service. When the first network element receives a request of another network element for the second network service, the first network element may query the configuration file, the context, or the query table maintained by the first network element. For example, the configuration file, the context, or the query table may be locally maintained by the first network element, or may be stored in a database. The first network element may invoke a database service to query the configuration file, the context, or the query table.

Alternatively, when the second network element has registered the second network service with the second network, and the second network determines not to open the second network service to the outside, the second network may send the second registration information to the first network element by using the second network element to cancel the second network service of the second network with the first network element. After receiving the second registration information, the first network element may delete the second network service of the second network. For example, the first network element deletes the correspondence between the second network and the second network service. For another example, the first network element may delete the second registration information from the configuration file, the context, or the query table of the second network or the second network service.

For example, the second network service may include at least one of the following: an access management service, a session management service, a data analysis service, a charging service, a connection resource management service, a computing service, a perception service, and a mobility management service.

For example, the second network service may be provided by a user in the user space, and the second network element may send the second registration information to the first network element based on a request or authorization of the user. For example, a first user in the user space has a calculation function. The first user authorizes the second network element when the first user can provide a computing service. The second network element provides the second registration information to register the computing service (or the computing function) of the first user with the network asset scheduling function. When another network element or another user space in the mobile network needs to invoke the computing function of the first user to assist in model training, the network asset scheduling function may request, from the user space (or the second network element) based on the second registration information, the computing service provided by the first user.

For another example, the first user has a perception function (for example, channel perception, temperature perception, a positioning capability, or image recognition). When the first user can provide a perception service, the perception function (or the perception service) of the first user may be registered with the network asset scheduling function by using the second network element. When the another network element or the another user space in the mobile network needs to invoke the perception function of the first user to percept a busy/idle channel state or assist in positioning, the network asset scheduling function may request, from the user space (or the second network element) based on the second registration information, the perception service provided by the first user.

For example, the second registration information may include at least one of network identification information of the second network, a business type, a service type, a data type, and location information of the second network. For example, the network identification information of the second network may include one or more of a subnet identifier, a user space identifier, and an identifier of a network domain (for example, an AN domain, a CN domain, a control plane domain, or a user plane domain) in which a network function providing the second network service is located. The business type of the second network may include IoT, V2X, or a connection service. The data type may include user behavior data, service data, or an AI model. For another example, the second network service is provided by the first user in the second network, and the network identification information of the second network may include a user identifier or a user IP of the first user.

702: The first network element sends second indication information; and correspondingly, the fourth network element receives the second indication information, where the second indication information indicates that the second network provides the second network service, and the fourth network element is configured to schedule a network service in a third network.

For example, after receiving the second registration information sent by the second network element, the first network element may indicate, by using the second indication information, to the fourth network element that the second network provides the second network service. For example, the first indication information may indicate that the fourth network element may invoke the second network service of the second network.

For example, the second indication information may include the second registration information, and the first network element may share the second registration information with the fourth network element by using the second indication information.

For example, the first network element may be a CN-side network asset scheduling function, and the fourth network element may be an AN-side network asset scheduling function. Alternatively, the first network element is an AN-side network asset scheduling function, and the fourth network element is a CN-side network asset scheduling function. The second network may be user space, that is, registration information (for example, the second registration information) of the user space may be shared between the AN-side network asset scheduling function and the CN-side network asset scheduling function. For example, the user space registers the perception service of the first user with the CN-side network asset scheduling function. If the perception service is a network service required by an access network side, after obtaining registration information of the perception function, the CN-side network asset scheduling function may synchronize the registration information to the AN-side network asset scheduling function by using the second indication information. For another example, the user space has registered the computing service of the first user with the AN-side network asset scheduling function, and the core network side can also invoke the computing service. In this case, after receiving registration information of the computing service, the AN-side network asset scheduling function may synchronize the registration information of the computing service to the CN-side network asset scheduling function by using the second indication information.

In this embodiment of this application, the second network may register a network function or a network service of the second network with the first network element, so that another network element or network can schedule the network service or the network function of the second network, the resources of the second network can be fully utilized, and the network function does not need to be repeatedly constructed in the mobile network, thereby improving network service efficiency.

In some possible implementations, the method shown in FIG. 7 further includes step 703 and step 704.

703: A fifth network element sends a fourth request message; and correspondingly, the fourth network element receives the fourth request message, where the fourth request message is used to request the second network service.

For example, the fifth network element may be a network-level function (for example, a network-level CN function or a network-level AN function), user space, or a user-level function (for example, a user-level AN function or a user-level CN function).

For example, the fourth request message may be used to request the second network service of the second network. For example, the fourth request message is used to request a data or computing service of the second network (that is, the user space).

704: The fourth network element sends a fourth feedback message to the fifth network element; and correspondingly, the fifth network element receives the fourth feedback message.

The fourth feedback message may include information about the second network, information about the first network element, or a service result of the second network service. The information about the second network may include identification information of the second network, or a user identifier or an IP address of a user that is in the second network and provide the second network service. The information about the first network element may include a network element identifier (Network Element ID), a network function instance identifier (Network Function instance ID), or the like of the first network element.

It may be understood that the fifth network element and the third network element may be a same network element, or may be different network elements.

For example, the fourth network element may determine, based on the second indication information, that the second network provides the second network service. In a possible implementation, the fourth network element may schedule a second network service of the second network. In this implementation, the fourth feedback message includes the information about the second network or the service result of the second network service. For example, the fourth network element may forward the fourth request message to the second network, so that the second network provides the second network service for the fifth network element. The fourth network element receives the service result fed back by the second network, and sends the service result to the fifth network element by using the fourth feedback message. Alternatively, after determining that the second network provides the second network service, the fourth network element may send the information about the second network to the fifth network element by using the second feedback message, and the fifth network element sends the request message for the second network service to the second network.

In this implementation, after the first network element shares the registration information of the second network with the fourth network element, the fourth network element may schedule the second network service of the second network, and does not need to request the second network service by using the first network element, thereby improving network service efficiency.

In another possible implementation, the fourth network element cannot schedule the second network service of the second network, the second network service of the second network is scheduled by the first network element, and the fourth feedback message includes the information about the second network or the service result of the second network service. For example, after receiving the fourth request message, the fourth network element may forward the fourth request message to the first network element, and the first network element schedules the second network service. The first network element determines whether the second network can provide the second network service for the fifth network element. When the second network can provide the second network service for the fifth network element, the first network element may send the request message for the second network service to the second network, so that the second network provides the second network service for the fifth network element. The first network element receives a service result fed back by the second network, and forwards the service result to the fourth network element. After receiving the service result, the fourth network element sends the service result to the fifth network element by using the fourth feedback message. Alternatively, when the second network can provide the second network service for the fifth network element, the first network element sends the information about the second network to the fourth network element. After receiving the information about the second network, the fourth network element sends the information about the second network to the fifth network element by using the fourth feedback message, and the fifth network element sends the request message for the second network service to the second network.

In this implementation, the second network service of the second network is scheduled by the first network element. After receiving the request message for the second network service, the fourth network element may forward the request message to the first network element, and the first network element schedules the second network to provide the second network service for the fifth network element. In this application, the second network may be user space, and the first network element may schedule the user space to provide a network service for another network element or another user space, so that resources of the user space can be fully utilized.

In still another possible implementation, the fourth network element cannot schedule the second network service of the second network, the second network service of the second network is scheduled by the first network element, and the fourth feedback message includes the information about the first network element. In this implementation, after receiving the fourth request message, the fourth network element may send the information about the first network element to the fifth network element by using the fourth feedback message. The fifth network element sends a fifth request message to the first network element based on the fourth feedback message to request the second network to provide the second network service for the fifth network element. After receiving the fifth request message, the first network element may send a fifth feedback message to the fifth network element. The fifth feedback message may include the service result of the second network service or the information about the second network.

For example, the fourth feedback message may further include the information about the second network, and the fifth request message may also include the information about the second network.

In this implementation, the second network service of the second network is scheduled by the first network element. After receiving the request message for the second network service, the fourth network element may send the information about the first network element to the fifth network element, so that the fifth network element can directly send the request message to the first network element based on the information about the first network element, thereby simplifying an interaction procedure and improving the network service efficiency.

It may be understood that in the foregoing implementations, for a part that is not described in detail in one implementation, refer to another implementation. In addition, the embodiments shown above may be combined with each other. For example, the method shown in FIG. 7 may be combined with the method shown in FIG. 5. To be specific, the network service method provided in embodiments of this application may include step 501, step 502, step 503, step 504, step 505, step 701, step 702, step 703, and step 704. For another example, the method shown in FIG. 7 is combined with the method shown in FIG. 6. To be specific, the network service method provided in embodiments of this application may include step 601, step 602, step 603, step 604, step 605, step 701, step 702, step 703, and step 704.

A communication apparatus provided in an embodiment of this application is described below.

In this application, the communication apparatus is divided into functional modules based on the foregoing method embodiments. For example, the functional modules may be obtained through division in correspondence to functions, or two or more functions may be integrated in one processing module. The integrated module may be implemented in a form of hardware, or may be implemented in a form of a software functional module. It should be noted that module division in this application is an example, and is merely a logical function division. During actual implementation, another division manner may be used. The following describes communication apparatuses in embodiments of this application in detail with reference to FIG. 8 to FIG. 10.

FIG. 8 is a diagram of a structure of a communication apparatus according to an embodiment of this application. As shown in FIG. 8, the communication apparatus includes a processing unit 801, a sending unit 802, and a receiving unit 803.

In some embodiments of this application, the communication apparatus may be the first network element shown above. To be specific, the communication apparatus shown in FIG. 8 may be configured to perform steps, functions, or the like performed by the first network element in the foregoing method embodiments. For example, the communication apparatus may be a beamformed transmit device, a chip, or the like. This is not limited in this embodiment of this application.

The receiving unit 803 is configured to receive a first request message.

The sending unit 802 is configured to send a first feedback message.

Optionally, the sending unit 802 is further configured to send a second request message, and the receiving unit 803 is further configured to receive a second feedback message.

Optionally, the receiving unit 803 is further configured to receive first indication information.

Optionally, the receiving unit 803 is further configured to receive first registration information.

Optionally, the receiving unit 803 is further configured to receive second registration information.

Optionally, the sending unit 802 is further configured to send second indication information.

It may be understood that for specific descriptions of the first request message, the first feedback message, the second request message, the second feedback message, the first indication information, the first registration information, the second registration information, the second indication information, and the like, refer to the method embodiments shown above, for example, related descriptions of the methods shown in FIG. 5, FIG. 6, and FIG. 7. Details are not described herein again.

It may be understood that specific descriptions of the processing unit, the sending unit, and the receiving unit that are shown in this embodiment of this application are merely examples. For specific functions of the processing unit, the sending unit, and the receiving unit, steps performed by the processing unit, the sending unit, and the receiving unit, or the like, refer to the foregoing method embodiments. Details are not described herein again.

Still refer to FIG. 8. In some other embodiments of this application, the communication apparatus may be the second network element shown above. To be specific, the communication apparatus shown in FIG. 8 may be configured to perform steps, functions, or the like performed by the second network element in the foregoing method embodiments. For example, the communication apparatus may be a beamformed receive device, a chip, or the like. This is not limited in this embodiment of this application.

The sending unit 802 is configured to send the first request message.

The receiving unit 803 is configured to receive the first feedback information.

Optionally, the sending unit 802 is further configured to send a third request message, and the receiving unit 803 is further configured to receive a third feedback message.

Optionally, the sending unit 802 is further configured to send the second registration information.

It may be understood that for specific descriptions of the first request message, the first feedback message, the second request message, the second feedback message, the first indication information, the first registration information, the second registration information, the second indication information, and the like, refer to the method embodiments shown above, for example, related descriptions of the methods shown in FIG. 5, FIG. 6, and FIG. 7. Details are not described herein again.

It may be understood that specific descriptions of the receiving unit, the sending unit, and the processing unit that are shown in this embodiment of this application are merely examples. For specific functions of the receiving unit, the sending unit, and the processing unit, steps performed by the receiving unit, the sending unit, and the processing unit, or the like, refer to the foregoing method embodiments. Details are not described herein again.

Still refer to FIG. 8. In some other embodiments of this application, the communication apparatus may be the fourth network element shown above. To be specific, the communication apparatus shown in FIG. 8 may be configured to perform steps, functions, or the like performed by the fourth network element in the foregoing method embodiments. For example, the communication apparatus may be a beamformed receive device, a chip, or the like. This is not limited in this embodiment of this application.

The receiving unit 803 is configured to receive a second request message.

The sending unit 802 is configured to send a second feedback message.

Optionally, the sending unit 802 is further configured to send first indication information.

Optionally, the receiving unit 803 is further configured to receive second indication information.

It may be understood that for specific descriptions of the first request message, the first feedback message, the second request message, the second feedback message, the first indication information, the first registration information, the second registration information, the second indication information, and the like, refer to the method embodiments shown above, for example, related descriptions of the methods shown in FIG. 5, FIG. 6, and FIG. 7. Details are not described herein again.

It may be understood that specific descriptions of the receiving unit, the sending unit, and the processing unit that are shown in this embodiment of this application are merely examples. For specific functions of the receiving unit, the sending unit, and the processing unit, steps performed by the receiving unit, the sending unit, and the processing unit, or the like, refer to the foregoing method embodiments. Details are not described herein again.

Still refer to FIG. 8. In some other embodiments of this application, the communication apparatus may be the third network element shown above. To be specific, the communication apparatus shown in FIG. 8 may be configured to perform steps, functions, or the like performed by the third network element in the foregoing method embodiments. For example, the communication apparatus may be a beamformed receive device, a chip, or the like. This is not limited in this embodiment of this application.

The processing unit 801 is configured to determine to provide a first network service.

The sending unit 802 is configured to send the first registration information to a first network element.

Optionally, the receiving unit 803 is further configured to receive the third request message, and the sending unit 802 is further configured to send the third feedback message.

It may be understood that for specific descriptions of the first network element, the first request message, the first feedback message, the second request message, the second feedback message, the first indication information, the first registration information, the second registration information, the second indication information, and the like, refer to the method embodiments shown above, for example, related descriptions of the methods shown in FIG. 5, FIG. 6, and FIG. 7. Details are not described herein again.

It may be understood that specific descriptions of the receiving unit, the sending unit, and the processing unit that are shown in this embodiment of this application are merely examples. For specific functions of the receiving unit, the sending unit, and the processing unit, steps performed by the receiving unit, the sending unit, and the processing unit, or the like, refer to the foregoing method embodiments. Details are not described herein again.

The foregoing describes the first network element, the second network element, the third network element, and the fourth network element in the embodiments of this application. The following describes possible product forms of the first network element, the second network element, the third network element, and the fourth network element. It should be understood that any form of product having a function of the first network element described in FIG. 8, any form of product having a function of the second network element described in FIG. 8, any form of product having a function of the third network element described in FIG. 8, or any form of product having a function of the fourth network element described in FIG. 8 is within the protection scope of embodiments of this application. It should be further understood that the following descriptions are merely examples, and product forms of the first network element, the second network element, the third network element, and the fourth network element in embodiments of this application are not limited thereto.

In the communication apparatus shown in FIG. 8, the processing unit 801 may be one or more processors, the sending unit 802 may be a transmitter, the receiving unit 803 may be a receiver, and the sending unit and the receiving unit are integrated into one component, for example, a transceiver. Alternatively, the processing unit 801 may be one or more processors (or the processing unit 801 may be one or more logic circuits), the sending unit 802 may be an output interface, the receiving unit 803 may be an input interface, and the input interface and the output interface may be integrated into one unit, for example, an input/output interface. Details are described below.

In a possible implementation, in the communication apparatus shown in FIG. 8, the processing unit 801 may be one or more processors, and the sending unit 802 and the receiving unit 803 are integrated into one component, for example, a transceiver. In embodiments of this application, the processor and the transceiver may be coupled and so on. A manner of connection between the processor and the transceiver is not limited in embodiments of this application.

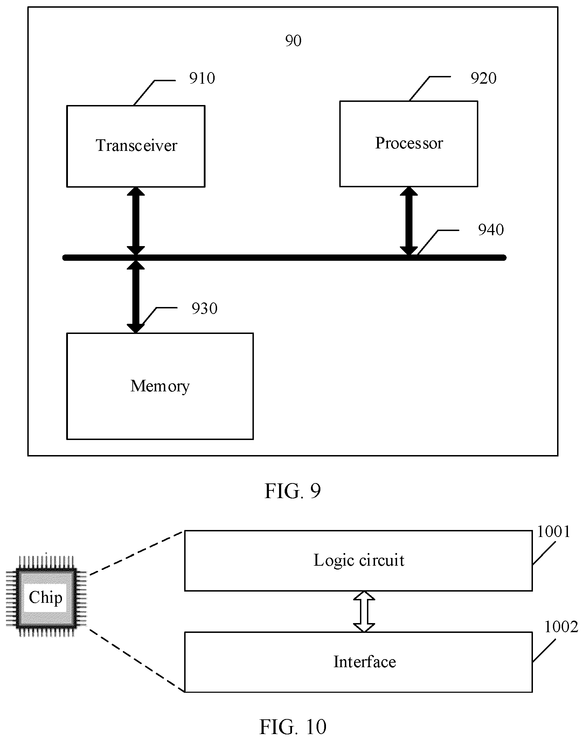

As shown in FIG. 9, the communication apparatus 90 includes one or more processors 920 and a transceiver 910.

For example, when the communication apparatus is configured to perform the step, the method, or the function performed by the foregoing first network element, the transceiver 910 is configured to receive a first request message and send a first feedback message. Optionally, the transceiver 910 is further configured to send a second request message and receive a second feedback message. Optionally, the transceiver 910 is further configured to receive first indication information. Optionally, the transceiver 910 is further configured to receive first registration information. Optionally, the transceiver 910 is further configured to receive second registration information. Optionally, the transceiver 910 is further configured to send second indication information.

For example, when the communication apparatus is configured to perform the step, the method, or the function performed by the foregoing second network element, the transceiver 910 is configured to send the first request message and receive the first feedback message. Optionally, the transceiver 910 is further configured to send a third request message and receive a third feedback message. Optionally, the transceiver 910 is further configured to send the second registration information.

For example, when the communication apparatus is configured to perform the step, the method, or the function performed by the foregoing fourth network element, the transceiver 910 is configured to receive the second request message and send the second feedback message. Optionally, the transceiver 910 is further configured to send the first indication information. Optionally, the transceiver 910 is further configured to receive the second indication information.

For example, when the communication apparatus is configured to perform the step, the method, or the function performed by the foregoing third network element, the processor 920 is configured to determine to provide a first network service, and the transceiver 910 is configured to send the first registration information. Optionally, the transceiver 910 is further configured to receive the third request message and send the third feedback message.

It may be understood that for specific descriptions of the first request message, the first feedback message, the second request message, the second feedback message, the first indication information, the first registration information, the second registration information, the second indication information, and the like, refer to the method embodiments shown above, for example, related descriptions of the methods shown in FIG. 5, FIG. 6, and FIG. 7. Details are not described herein again.

It may be understood that for specific descriptions of the processor and the transceiver, refer to descriptions of the processing unit, the sending unit, and the receiving unit that are shown in FIG. 8. Details are not described herein again.

In each implementation of the communication apparatus shown in FIG. 9, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 90 may further include one or more memories 930, configured to store program instructions and/or data. The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. The processor 920 may operate in collaboration with the memory 930. The processor 920 may execute the program instructions stored in the memory 930. Optionally, at least one of the one or more memories may be included in the processor.

A specific connection medium between the transceiver 910, the processor 920, and the memory 930 is not limited in this embodiment of this application. In this embodiment of this application, in FIG. 9, the memory 930, the processor 920, and the transceiver 910 are connected to each other by using a bus 940. The bus is represented by using a thick line in FIG. 9. A manner of connection between other components is merely an example for description, but is not used as a limitation. The bus may be classified as an address bus, a data bus, a control bus, or the like. For ease of representation, only one thick line is used to represent the bus in FIG. 9, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like, and may implement or execute the methods, steps, and logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a portable read-only memory (Compact Disc Read-Only Memory, CD-ROM), or the like. The memory is any storage medium that can be used to carry or store program code in a form of an instruction structure or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

The processor 920 is mainly configured to: process a communication protocol and communication data, control the entire communication apparatus, execute a software program, and process data of the software program. The memory 930 is mainly configured to store a software program and data. The transceiver 910 may include a control circuit and an antenna. The control circuit is mainly configured to convert a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user.

After the communication apparatus is powered on, the processor 920 may read the software program from the memory 930, interpret and execute instructions of the software program, and process data of the software program. When data needs to be sent wirelessly, the processor 920 performs baseband processing on the to-be-sent data, and then outputs a baseband signal to a radio frequency circuit. The radio frequency circuit performs radio frequency processing on the baseband signal, and then sends a radio frequency signal in an electromagnetic wave form through the antenna. When data is sent to the communication apparatus, the radio frequency circuit receives the radio frequency signal through the antenna, converts the radio frequency signal into a baseband signal, and outputs the baseband signal to the processor 920. The processor 920 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in this embodiment of this application may further have more components and the like than those in FIG. 9. This is not limited in this embodiment of this application. The methods performed by the processor and the transceiver are merely examples. For specific steps performed by the processor and the transceiver, refer to the methods described above.

In another possible implementation, in the communication apparatus shown in FIG. 8, the processing unit 801 may be one or more logic circuits, the sending unit 802 may be an output interface, the receiving unit 803 may be an input interface, and the input interface and the output interface may be integrated into one unit, for example, an input/output interface. The input/output interface is also referred to as a communication interface, an interface circuit, an interface, or the like. As shown in FIG. 10, the communication apparatus shown in FIG. 10 includes a logic circuit 1001 and an interface 1002. In other words, the processing unit 801 may be implemented by using the logic circuit 1001, and the sending unit 802 and the receiving unit 803 may be implemented by using the interface 1002. The logic circuit 1001 may be a chip, a processing circuit, an integrated circuit, a system on chip (system on chip, SoC), or the like. The interface 1002 may be a communication interface, an input/output interface, a pin, or the like. For example, FIG. 10 shows an example in which the communication apparatus is a chip. The chip includes a logic circuit 1001 and an interface 1002.

In this embodiment of this application, the logic circuit and the interface may be coupled to each other. A specific manner of connection between the logical circuit and the interface is not limited in this embodiment of this application.

For example, when the communication apparatus is configured to perform the method, the function, or the step performed by the first network element, the interface 1002 is configured to input a first request message and output a first feedback message. Optionally, the interface 1002 is further configured to output a second request message and input a second feedback message. Optionally, the interface 1002 is further configured to input first indication information. Optionally, the interface 1002 is further configured to input first registration information. Optionally, the interface 1002 is further configured to input second registration information. Optionally, the interface 1002 is further configured to output second indication information.

For example, when the communication apparatus is configured to perform the step, the method, or the function performed by the foregoing second network element, the interface 1002 is configured to output the first request message and input the first feedback message. Optionally, the interface 1002 is further configured to output a third request message and input a third feedback message. Optionally, the interface 1002 is further configured to output the second registration information.

For example, when the communication apparatus is configured to perform the step, the method, or the function performed by the foregoing fourth network element, the interface 1002 is configured to input the second request message and output the second feedback message. Optionally, the interface 1002 is further configured to output the first indication information. Optionally, the interface 1002 is further configured to input the second indication information.

For example, when the communication apparatus is configured to perform the step, the method, or the function performed by the foregoing third network element, the logic circuit 1001 is configured to determine to provide a first network service, and the interface 1002 is configured to output the first registration information. Optionally, the interface 1002 is further configured to input the third request message and output the third feedback message.

It may be understood that for specific descriptions of the first request message, the first feedback message, the second request message, the second feedback message, the first indication information, the first registration information, the second registration information, the second indication information, and the like, refer to the method embodiments shown above, for example, related descriptions of the methods shown in FIG. 5, FIG. 6, and FIG. 7. Details are not described herein again.

For specific implementations of the embodiments shown in FIG. 10, refer to the foregoing embodiments. Details are not described herein again.

An embodiment of this application further provides a communication system. The communication system includes at least two of the following: a first network element, a second network element, a third network element, and a fourth network element. The first network element, the second network element, the third network element, and the fourth network element may be configured to perform the method in any one of the foregoing embodiments (as shown in FIG. 5, FIG. 6, FIG. 7, and the like).

In addition, this application further provides a computer program. The computer program is used to implement operation and/or processing performed by the first network element in the method provided in this application.

This application further provides a computer program. The computer program is used to implement the operation and/or processing performed by the second network element in the method provided in this application.

This application further provides a computer program. The computer program is used to implement the operation and/or processing performed by the third network element in the method provided in this application.

This application further provides a computer program. The computer program is used to implement the operation and/or processing performed by the fourth network element in the method provided in this application.

This application further provides a computer-readable storage medium. The computer-readable storage medium stores computer code. When the computer code is run on a computer, the computer is enabled to perform the operation and/or processing performed by the first network element in the method provided in this application.

This application further provides a computer-readable storage medium. The computer-readable storage medium stores computer code. When the computer code is run on a computer, the computer is enabled to perform the operation and/or processing performed by the second network element in the method provided in this application.

This application further provides a computer-readable storage medium. The computer-readable storage medium stores computer code. When the computer code is run on a computer, the computer is enabled to perform the operation and/or processing performed by the third network element in the method provided in this application.

This application further provides a computer-readable storage medium. The computer-readable storage medium stores computer code. When the computer code is run on a computer, the computer is enabled to perform the operation and/or processing performed by the fourth network element in the method provided in this application.

This application further provides a computer program product. The computer program product includes computer code or a computer program. When the computer code or the computer program runs on a computer, the operation and/or processing performed by the first network element in the method provided in this application are/is performed.

This application further provides a computer program product. The computer program product includes computer code or a computer program. When the computer code or the computer program runs on a computer, the operation and/or processing performed by the second network element in the method provided in this application are/is performed.

This application further provides a computer program product. The computer program product includes computer code or a computer program. When the computer code or the computer program runs on a computer, the operation and/or processing performed by the third network element in the method provided in this application are/is performed.

This application further provides a computer program product. The computer program product includes computer code or a computer program. When the computer code or the computer program runs on a computer, the operation and/or processing performed by the fourth network element in the method provided in this application are/is performed.

An embodiment of this application further provides a chip or a chip system, including a processor, configured to perform the method in any one of the foregoing embodiments (as shown in FIG. 5, FIG. 6, FIG. 7, and the like).

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When implemented in a form of a software functional unit and sold and used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network service method, comprising:
receiving, by a first network element, a first request message from a second network element, wherein the first request message is used to request a first network service, the first network element is configured to schedule a network service in a first network, and the second network element is configured to provide a service for a user in a second network; and
sending, by the first network element, a first feedback message to the second network element, wherein the first feedback message comprises information about a third network element or a service result of the first network service, and the third network element provides the first network service.

2. The method according to claim **1,** wherein the third network element is not comprised in the first network, and before the sending, by the first network element, a first feedback message to the second network element, the method further comprises:
sending, by the first network element, a second request message to a fourth network element, wherein the second request message is used to request the first network service from the fourth network element, the fourth network element is configured to schedule a network service in a third network, and the third network comprises the third network element; and
receiving, by the first network element, a second feedback message from the fourth network element, wherein the second feedback message comprises the information about the third network element or the service result of the first network service.

3. The method according to claim 2, wherein before the sending, by the first network element, a second request message to a fourth network element, the method further comprises:
receiving, by the first network element, first indication information from the fourth network element, wherein the first indication information indicates that the third network element provides the first network service.

4. The method according to claim 2 or 3, wherein the first network element is an access network element, the fourth network element is a core network element, and the third network element comprises at least one of the following network functions: an access management function, a session management function, a data analysis function, and a charging function;
the first network element is the core network element, the fourth network element is the access network element, and the third network element comprises at least one of the following network functions: a connection resource management function, a perception function, and a mobility management function.

5. The method according to claim **1,** wherein the third network element is comprised in the first network, and before the receiving, by a first network element, a first request message from a second network element, the method further comprises:
receiving, by the first network element, first registration information from the third network element, wherein the first registration information is used to register the first network service of the third network element with the first network element.

6. The method according to any one of claims 1 to 5, further comprising:
receiving, by the first network element, second registration information sent by the second network element, wherein the second registration information is used to register or cancel a second network service of the second network with the first network element.

7. The method according to claim 6, wherein after the receiving, by the first network element, second registration information sent by the second network element, the method further comprises:
sending, by the first network element, second indication information to the fourth network element, wherein the second indication information indicates that the second network provides the second network service, and the fourth network element is configured to schedule the network service in the third network.

8. The method according to claim 7, wherein the second indication information comprises the second registration information.

9. The method according to any one of claims 6 to 8, wherein the second registration information comprises at least one of the following: identification information, a business type, a service type, a data type, and location information of the second network.

10. The method according to any one of claims 1 to 9, wherein the first network service comprises at least one of the following: an access management service, a session management service, a data analysis service, a charging service, a connection resource management service, a perception service, and a mobility management service.

11. The method according to any one of claims 1 to 10, wherein the second network element is comprised in the second network, and the second network comprises a non-public network.

12. The method according to any one of claims 1 to 11, wherein the first network is comprised in an access network or a core network, and the second network is comprised in the access network or the core network.

13. A network service method, comprising:
sending, by a second network element, a first request message to a first network element, wherein the first request message is used to request a first network service, the first network element is configured to schedule a network service in a first network, and the second network element is configured to provide a service for a user in a second network; and
receiving, by the second network element, a first feedback message from the first network element, wherein the first feedback message comprises information about a third network element or a service result of the first network service, and the third network element provides the first network service.

14. The method according to claim 13, wherein the first feedback message comprises the information about the third network element, and the method further comprises:
sending, by the second network element, a third request message to the third network element based on the first feedback message, wherein the third request message is used to request the first network service; and
receiving, by the second network, a third feedback message from the third network element, wherein the third feedback message comprises the service result of the first network service.

15. The method according to claim 13 or 14, further comprising:
sending, by the second network element, second registration information to the first network element, wherein the second registration information is used to register or cancel a second network service of the second network with the first network element.

16. The method according to claim 15, wherein the second registration information comprises at least one of the following: identification information, a business type, a service type, a data type, and location information of the second network.

17. The method according to any one of claims 13 to 16, wherein the first network service comprises at least one of the following: an access management service, a session management service, a data analysis service, a charging service, a connection resource management service, a perception service, and a mobility management service.

18. The method according to any one of claims 13 to 17, wherein the second network element is comprised in the second network, and the second network comprises a non-public network.

19. The method according to any one of claims 13 to 18, wherein the first network is comprised in an access network or a core network, and the second network is comprised in the access network or the core network.

20. A network service method, comprising:
receiving, by a fourth network element, a second request message from a first network element, wherein the second request message is used to request a first network service, the first network element is configured to schedule a network service in a first network, and the fourth network element is configured to schedule a network service in a third network; and
sending, by the fourth network element, a second feedback message to the first network element, wherein the second feedback message comprises information about a third network element or a service result of the first network service, and the third network element provides the first network service.

21. The method according to claim 20, further comprising:
sending, by the fourth network element, first indication information to the first network element, wherein the first indication information indicates that the third network element provides the first network element service.

22. The method according to claim 20 or 21, wherein the first network element is an access network element, the fourth network element is a core network element, and the third network element comprises at least one of the following network functions: an access management function, a session management function, a data analysis function, and a charging function; or
the first network element is the core network element, the fourth network element is the access network element, and the third network element comprises at least one of the following network functions: a connection resource management function, a perception function, and a mobility management function.

23. The method according to any one of claims 20 to 22, further comprising:
receiving, by the fourth network element, second indication information from the first network element, wherein the second indication information indicates that a second network provides a second network service.

24. The method according to claim 23, wherein the second indication information comprises second registration information, and the second registration information is used to register or cancel the second network service of the second network.

25. The method according to claim 24, wherein the second registration information comprises at least one of the following: identification information, a business type, a service type, a data type, and location information of the second network.

26. The method according to any one of claims 23 to 25, wherein the first network is comprised in an access network or a core network, and the second network is comprised in the access network or the core network.

27. The method according to any one of claims 20 to 26, wherein the first network service comprises at least one of the following: an access management service, a session management service, a data analysis service, a charging service, a connection resource management service, a perception service, and a mobility management service.

28. A network service method, comprising:
sending, by a second network element, a first request message to a first network element, wherein the first request message is used to request a first network service, the second network element is configured to provide a service for a user in a second network, and the first network element is configured to schedule a network service in a first network; and
receiving, by the first network element, the first request message, and sending a first feedback message to the second network element, wherein the first feedback message comprises information about a third network element or a service result of the first network service, and the third network element provides the first network element service.

29. The method according to claim 28, wherein the first feedback message comprises the information about the third network element, and the method further comprises:
receiving, by the second network element, the first feedback message, and sending a third request message to the third network element based on the first feedback message, wherein the third request message is used to request the first network service; and
receiving, by the third network element, the third request message, and sending a third feedback message to the second network element, wherein the third feedback message comprises the service result of the first network service.

30. The method according to claim 28 or 29, wherein the third network element is not comprised in the first network, and the method further comprises:
sending, by the first network element, a second request message to a fourth network element, wherein the second request message is used to request the first network service from the fourth network element, the fourth network element is configured to schedule a network service in a third network, and the third network comprises the third network element; and
receiving, by the first network element, a second feedback message from the fourth network element, wherein the second feedback information comprises the information about the third network element or the service result of the first network service.

31. The method according to claim 30, wherein before the forwarding, by the first network element, a first request message to a fourth network element, the method further comprises:
receiving, by the first network element, first indication information from the fourth network element, wherein the first indication information indicates that the third network element provides the first network service.

32. The method according to claim 30 or 31, wherein the first network element is an access network element, the fourth network element is a core network element, and the third network element comprises at least one of the following network functions: an access management function, a session management function, a data analysis function, and a charging function; or
the first network element is the core network element, the fourth network element is the access network element, and the third network element comprises at least one of the following network functions: a connection resource management function, a perception function, and a mobility management function.

33. The method according to claim 28 or 29, wherein the third network element is comprised in the first network, and before the receiving, by the first network element, the first request message from the second network element, the method further comprises:
receiving, by the first network element, first registration information from the third network element, wherein the first registration information is used to register the first network service of the third network element with the first network element.

34. The method according to any one of claims 28 to 33, further comprising:
sending, by the second network element, second registration information to the first network element, wherein the second registration information is used to register or cancel a second network service of the second network with the first network element.

35. The method according to claim 34, wherein after the sending, by the second network element, second registration information to the first network element, the method further comprises:
sending, by the first network element, second indication information to the fourth network element, wherein the second indication information indicates that the second network provides the second network service, and the fourth network element is configured to schedule the network service in the third network.

36. The method according to claim 35, wherein the second indication information comprises the second registration information.

37. The method according to any one of claims 34 to 36, wherein the second registration information comprises at least one of the following: identification information, a business type, a service type, a data type, and location information of the second network.

38. The method according to any one of claims 28 to 37, wherein the first network service comprises at least one of the following: an access management service, a session management service, a data analysis service, a charging service, a connection resource management service, a perception service, and a mobility management service.

39. The method according to any one of claims 28 to 38, wherein the second network element is comprised in the second network, and the second network comprises a non-public network.

40. The method according to any one of claims 28 to 39, wherein the first network is comprised in an access network or a core network, and the second network is comprised in the access network or the core network.

41. A communication apparatus, comprising a unit configured to perform the method according to any one of claims 1 to 12, or comprising a unit configured to perform the method according to any one of claims 13 to 19, or comprising a unit configured to perform the method according to any one of claims 20 to 27.

42. A communication apparatus, comprising a processor and a memory, wherein
the memory is configured to store computer-executable instructions; and
the processor is configured to execute the computer-executable instructions, so that the method according to any one of claims 1 to 12 is performed, or the method according to any one of claims 13 to 19 is performed, or the method according to any one of claims 20 to 27 is performed.

43. A computer-readable storage medium, wherein the computer-readable storage medium is configured to store a computer program; and when the computer program is executed, the method according to any one of claims 1 to 12 is performed, or the method according to any one of claims 13 to 19 is performed, or the method according to any one of claims 20 to 27 is performed.

44. A communication system, comprising at least two of the following: a first network element, a second network element, and a fourth network element, wherein the first communication apparatus is configured to perform the method according to any one of claims 1 to 12, the second network element is configured to perform the method according to any one of claims 13 to 19, and the fourth network element is configured to perform the method according to any one of claims 20 to 27.
